(19) Europäisches Patentamt / European Patent Office / Office européen des brevets

(11) EP 4 286 484 B1

(12) # EUROPEAN PATENT SPECIFICATION

(45) Date of publication and mention of the grant of the patent:
**20.11.2024 Bulletin 2024/47**

(21) Application number: **23176021.6**

(22) Date of filing: **30.05.2023**

(51) International Patent Classification (IPC):
***C09D 11/106*** *(2014.01)* ***C09D 11/108*** *(2014.01)*
***C09D 11/322*** *(2014.01)* ***C09D 11/38*** *(2014.01)*
***C09D 11/40*** *(2014.01)* ***C09D 11/54*** *(2014.01)*

(52) Cooperative Patent Classification (CPC):
**C09D 11/54; C09D 11/106; C09D 11/108; C09D 11/322; C09D 11/38; C09D 11/40**

(54) **AQUEOUS PRETREATMENT LIQUID, INK SET, PRINTED ITEM, AND SEPARATION METHOD**

WÄSSRIGE VORBEHANDLUNGSFLÜSSIGKEIT, TINTENSATZ, DRUCKARTIKEL UND TRENNVERFAHREN

LIQUIDE DE PRÉTRAITEMENT AQUEUX, ENSEMBLE D’ENCRES, ARTICLE IMPRIMÉ ET PROCÉDÉ DE SÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.06.2022 JP 2022089653**

(43) Date of publication of application:
**06.12.2023 Bulletin 2023/49**

(73) Proprietors:
- **artience Co., Ltd.**
  **Tokyo (JP)**
- **Toyocolor Co., Ltd.**
  **Chuo-ku**
  **Tokyo 104-8381 (JP)**

(72) Inventors:
- **YABUKI, Ryosuke**
  **Tokyo, 104-8381 (JP)**
- **HAYAMIZU, Mayuko**
  **Tokyo, 104-8381 (JP)**
- **SUZUKI, Norio**
  **Tokyo, 104-8381 (JP)**
- **KAMEYAMA, Yuji**
  **Tokyo, 104-8381 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 3 211 048** **EP-A1- 3 403 840**
**JP-A- 2018 154 118** **US-A1- 2021 060 993**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 286 484 B1

## Description

BACKGROUND OF THE INVENTION

FIELD OF THE INVENTION

The present invention relates to an aqueous pretreatment liquid, an ink set containing the aqueous pretreatment liquid and an aqueous inkjet ink, a printed item produced using the aqueous pretreatment liquid, and a method for separating a layer formed from the aqueous inkjet ink from the above printed item.

DESCRIPTION OF THE RELATED ART

The inkjet printing method is a method in which ink droplets from very fine nozzles are jetted onto and adhered to a substrate to obtain a printed item on which text or an image has been formed. Compared with conventional plate-based printing such as offset printing and gravure printing, inkjet printing offers the advantages that the size of the printing device can be reduced, color printing is comparatively easy, and image quality is largely unaffected by the printing environment, and therefore inkjet printing has become widely used not only in office and household applications, but also in industrial applications. Further, although the inks used with the inkjet printing method industrial applications have conventionally been solvent-based inks or ultravioletcurable inks, concerns regarding the safety and health of print workers have led to growing demands for aqueous inks containing water as the main component.

Moreover, in recent years, in order to improve the image quality of printed items produced using low-permeability substrates such as coated papers, art papers and finely coated papers, and impermeable substrates such as plastics, specifically, in order to prevent voids (a phenomenon observed in printed items or the like having a high coverage rate, wherein unsatisfactory wet spreading of the ink causes the substrate surface to remain exposed) and mixed color bleeding, pretreatment liquids containing a component (coagulant) that can cause aggregation of the solid components (pigments and/or resins) that exist in the aqueous inkjet ink, or intentionally induce thickening of the aqueous inkjet ink may be used (for example, see Patent Documents 1 and 2). Further, improvements in the characteristics of the printed items can also be achieved by adding various resins to the pretreatment liquid to improve the abrasion resistance or impart substrate adhesiveness.

Various types of resins have already been investigated and used as the above resins. For example, in Patent Documents 3 to 7, aqueous pretreatment liquids containing a polyvinyl alcohol or a modified polyvinyl alcohol and a coagulant are produced, and used on substrates such as paper substrates, plastic substrates, metal substrates and glass substrates. Vinyl alcohol-based resins are also widely used in daily commodities and pharmaceuticals, and are considered to offer comparatively high safety under typical usage conditions, and are therefore ideal for print workers and consumers from both a safety perspective and a health perspective.

In this description, the expression "aqueous (pretreatment liquid or inkjet ink)" means that the amount of water contained in the subject pretreatment liquid or inkjet ink is at least 50% by mass. Further, in this description, an "aqueous medium" is a medium formed from a liquid containing at least water.

However, investigations by the inventors of the present invention revealed that the aqueous pretreatment liquids disclosed in the above Patent Documents 3 to 7 suffered from problems of storage stability, such as a change in the pH of the pretreatment liquid over time, or the precipitation of sediment. Particularly in the case of industrial applications, being able to produce printed items of excellent image quality in a stable manner over a long period of time is a very important consideration, and it could be stated that a combination of favorable storage stability for the aqueous pretreatment liquid and excellent image quality for the printed items is essential.

On the other hand, in recent years, from the viewpoint of environmental protection, efforts are increasingly being made to recycle the substrates from printed items. The production of recycled paper from printed waste paper (printed items printed on paper substrates) is one such example, and specifically, the ink and the like is removed from the printed waste paper to produce a deinked pulp, and processes such as bleaching and papermaking are then conducted to produce recycled paper. Further, in order to reduce the amount of plastic waste, which is a major cause of environmental pollution, investigations are also being conducted into removing the ink and the like from printed items on plastic substrates, enabling reuse of the substrates, or alternatively, producing recycled pellets from the deinked plastic substrates, and then molding the pellets to produce recycled plastic products.

However, many of these conventional investigations use printed items produced using conventional plate-based printing methods, and adequate investigations have yet to be conducted into obtaining recycled paper, reusable plastic substrates, and recycled plastic products and the like (in this description, these types of substrates are generically referred to as "recycled substrates and the like") from printed items produced by the inkjet printing method. In particular, when the inkjet printing method is employed in the industrial applications mentioned above, because very large quantities of printed items are produced, the production of recycled substrates and the like from these printed items is also very

important from the viewpoint of environmental protection.

As outlined above, particularly in the case of inkjet printing used in industrial applications, further investigations are necessary in order to obtain a pretreatment liquid that exhibits excellent storage stability and printed item image quality, and also enables easy separation from the printed items of layers formed from aqueous inkjet inks.

PRIOR ART DOCUMENTS

PATENT DOCUMENTS

Patent Document 1: JP 2004-276253 A
Patent Document 2: JP 2011-056884 A
Patent Document 3: JP 2017-128117 A
Patent Document 4: JP 2017-148940 A
Patent Document 5: JP 2018-114751 A
Patent Document 6: JP 2019-127495 A
Patent Document 7: JP 2022-030295 A

SUMMARY OF THE INVENTION

The present invention has been developed to address the issues outlined above, and has an object of providing an aqueous pretreatment liquid which yields printed items with excellent image quality (specifically, can prevent defects such as voids and mixed color bleeding) and excellent separability in a separation treatment conducted in a basic solution, and also exhibits favorable storage stability. In addition to achieving the object described above, the present invention also has an object of providing an aqueous pretreatment liquid which is also capable of producing printed items having excellent abrasion resistance.

As a result of intensive research aimed at achieving the objects described above, the inventors of the present invention discovered a pretreatment liquid that combined an ethylene-vinyl alcohol copolymer resin and a surfactant having a specific HLB value, and were thus able to complete the present invention.

The present invention is able to provide an aqueous pretreatment liquid which yields printed items with excellent image quality (specifically, can prevent defects such as voids and mixed color bleeding) and excellent separability in a separation treatment conducted in a basic solution, and also exhibits favorable storage stability. Further, the present invention can also provide an aqueous pretreatment liquid which in addition to achieving the effects described above, is also capable of producing printed items having excellent abrasion resistance.

DETAILED DESCRIPTION OF THE INVENTION

Preferred embodiments of the present invention are described below in detail.

As described above, aqueous pretreatment liquids containing a coagulant and a polyvinyl alcohol are already known. Among these components, the coagulant disrupts the dispersed state of the solid components that exist within the subsequently printed aqueous inkjet ink, and/or induces an interaction with the components in the aqueous inkjet ink that causes an intentional increase in the viscosity of the aqueous inkjet ink, and is an essential material for obtaining printed items with no mixed color bleeding. Further, the vinyl alcohol-based resin has a large number of hydroxyl groups and exhibits high affinity with the aqueous inkjet ink, and therefore improves the wet spreadability of the aqueous inkjet ink and accelerates the diffusion of the coagulant into the aqueous inkjet ink. Moreover, pretreatment layers containing a vinyl alcohol resin can absorb a portion of the aqueous medium contained in aqueous inkjet inks. As a result of these effects, using a vinyl alcohol resin is able to produce an improvement in the image quality of the printed items (by preventing voids and mixed color bleeding) and a significant improvement in the drying properties.

In this description, a layer formed from an aqueous pretreatment liquid is called a "pretreatment liquid layer" or a "pretreatment layer". Further, the term "pretreatment liquid layer" (or "pretreatment layer") is deemed to include both layers in a wet state (for example, the state immediately following application of the aqueous pretreatment liquid to a substrate) and layers in a solid state (for example, the state following application of the aqueous pretreatment liquid to a substrate, and subsequent drying).

Moreover, in this description, the expression "application of the aqueous pretreatment liquid" is used as a generic expression that includes both printing of the aqueous pretreatment liquid by a non-contact method, and coating of the aqueous pretreatment liquid by contact with the substrate.

On the other hand, investigations by the inventors of the present invention revealed that aqueous pretreatment

liquids containing a coagulant and a polyvinyl alcohol resin were sometimes prone to inferior storage stability. Specifically, polyvinyl alcohols having a high saponification degree are essentially formed solely from vinyl alcohol structural units, and are therefore prone to precipitation due to their high crystallinity. Further, in the case of polyvinyl alcohols having a low saponification degree, the vinyl acetate structural units cause hydrolysis, resulting in changes in the structure of the polyvinyl alcohol, and acidification of the aqueous pretreatment liquid due to the generated acetic acid. Moreover, there is also a possibility that the function of the above coagulant may cause a deterioration in the solubility of the polyvinyl alcohol, causing precipitation due to the insolubilization.

Accordingly, in the present invention, an ethylene-vinyl alcohol copolymer resin (A-1) having a saponification degree of 80 mol% or higher is used as the resin (A) contained in the aqueous pretreatment liquid. In this way, by ensuring that the saponification degree is at least as high as a prescribed value, the abundance ratio of vinyl acetate structural units is reduced, and any changes in the structure of the copolymer resin and acidification of the aqueous pretreatment liquid over time can be suppressed. Further, by using a copolymer resin containing vinyl alcohol structural units and ethylene structural units, the crystallinity of the copolymer resin is lowered, preventing the generation of precipitates.

On the other hand, because ethylene structural units have high hydrophobicity, the ethylene-vinyl alcohol copolymer resin (A-1) having a saponification degree of 80 mol% or higher does not necessarily exhibit greater affinity with the water that represents the main component of the aqueous pretreatment liquid compared with vinyl alcohol resins. Accordingly, even though the aforementioned crystallization can be prevented, there is still a possibility that precipitation may occur in association with the insolubilization of the ethylene-vinyl alcohol copolymer resin. Furthermore, simply replacing the polyvinyl alcohol contained in the conventionally known aqueous pretreatment liquids described above with an ethylene-vinyl alcohol copolymer resin cannot suppress the decrease in solubility of the ethylene-vinyl alcohol copolymer resin caused by the aforementioned coagulant, and there is also a possibility that the precipitation associated with the insolubilization may be accelerated.

Accordingly, in the present invention, by also using a surfactant (B-1) having an HLB value of 9.5 or higher that has favorable affinity with water, precipitation associated with the above insolubilization can be prevented. Although the detailed mechanism remains unclear, it is thought that the surfactant (B-1) having an HLB value of 9.5 or higher acts like an emulsifier for the ethylene-vinyl alcohol copolymer resin (A-1), thereby stabilizing the existence of the ethylene-vinyl alcohol copolymer resin (A-1) within the aqueous pretreatment liquid and preventing the coagulant from approaching.

The surfactant (B-1) having an HLB value of 9.5 or higher is thought to be also have high affinity with the subsequently printed aqueous inkjet ink, and therefore in a similar manner to that observed when the vinyl alcohol resins described above are used, the wet spreadability of the aqueous inkjet ink improves, and diffusion of the coagulant into the aqueous inkjet ink can be accelerated, meaning a further improvement in image quality, and specifically prevention of voids and mixed color bleeding, can be achieved.

Moreover, the aqueous pretreatment liquid of the present invention also contains a water-soluble organic solvent (C-1) containing at least one hydroxyl group within the molecular structure. The water-soluble organic solvent (C-1) is thought to exhibit high affinity with all of the ethylene-vinyl alcohol copolymer resin (A-1), the surfactant (B-1) having an HLB value of 9.5 or higher, and water. As a result, it is thought that the solvent is able to uniformly disperse these materials within the aqueous pretreatment liquid, enabling further improvements in the image quality of the printed items and the separability, as well as reducing the probability of contact between the ethylene-vinyl alcohol copolymer resin (A-1) and the coagulant, thereby also improving the storage stability of the aqueous pretreatment liquid.

As described above, the ethylene-vinyl alcohol copolymer resin (A-1) contains both ethylene structural units having high hydrophobicity and vinyl alcohol structural units having high hydrophilicity. Accordingly, when a basic solution is used to separate a layer formed from an aqueous inkjet ink from a printed item produced using the aqueous pretreatment liquid containing the ethylene-vinyl alcohol copolymer resin (A-1), swelling of the pretreatment layer occurs in association with absorption of the basic solution, facilitating the separation of the layer formed from an aqueous inkjet ink. Further, when a flotation method is employed, the layer formed from an aqueous inkjet ink tends to readily adsorb to air bubbles via the pretreatment layer. As a result, the aqueous pretreatment liquid containing the ethylene-vinyl alcohol copolymer resin (A-1) is also effective in producing printed items having excellent separability.

As outlined above, in order to achieve the objects described above simultaneously and in a favorable manner, use of the aqueous pretreatment liquid with the composition described in the present invention is essential.

The materials that constitute the aqueous pretreatment liquid of the present invention are described below in further detail.

<Resin (A)>

The aqueous pretreatment liquid of the present invention contains the resin (A), and furthermore, the resin (A) includes the ethylene-vinyl alcohol copolymer resin (A-1) having a saponification degree of 80 mol% or higher. As outlined above, by using the ethylene-vinyl alcohol copolymer resin (A-1), the storage stability of the aqueous pretreatment liquid

can be improved. Further, the pretreatment layer containing the ethylene-vinyl alcohol copolymer resin (A-1) absorbs a portion of the aqueous medium contained in the subsequently printed aqueous inkjet ink, and can therefore improve the drying properties, and improve the image quality (and in particular, prevent mixed color bleeding) by suppressing coalescence of droplets of the aqueous inkjet ink. Moreover, the ethylene-vinyl alcohol copolymer resin (A-1) also contributes to absorption of the basic solution and the associated swelling, and adsorption to air bubbles, and therefore a printed item produced using the aqueous pretreatment liquid containing the ethylene-vinyl alcohol copolymer resin (A-1) also exhibits excellent separability of layers formed from aqueous inkjet inks. In addition, as already mentioned above, by also using the water-soluble organic solvent (C-1), the ethylene-vinyl alcohol copolymer resin (A-1) is able to be uniformly dispersed within the aqueous pretreatment liquid, thereby further enhancing these effects.

(Ethylene-Vinyl Alcohol Copolymer Resin (A-1))

The ethylene-vinyl alcohol copolymer resin (A-1) has at least a structural unit represented by formula 1 shown below and a structural unit represented by formula 2 shown below within the main chain.

[Chemical formula 1]

Formula 1 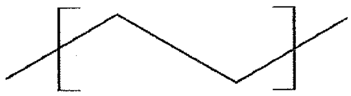

Formula 2 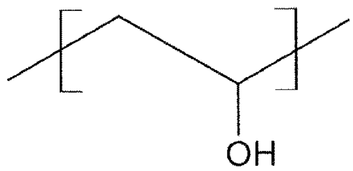

Further, a structural unit represented by general formula 3 may also be incorporated within the main chain of the ethylene-vinyl alcohol copolymer resin (A-1).

[Chemical formula 2]

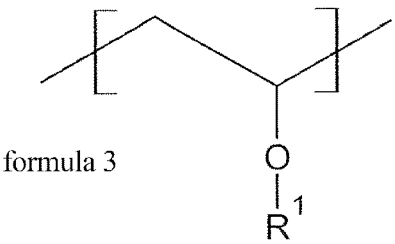

General formula 3

In general formula 3, $R^1$ represents a hydrocarbon group which may contain an oxygen atom, and examples include an acetyl group, acyl groups (excluding an acetyl group) and an acetoacetyl group.

In this description, the structural unit represented by formula 1 is called an "ethylene structural unit", the structural unit represented by formula 2 is called a "vinyl alcohol structural unit", a structural unit represented by general formula 3 in which $R^1$ is an acetyl group is called a "vinyl acetate structural unit", and a structural unit represented by general formula 3 in which $R^1$ is a group other than an acetyl group is called an "other structural unit".

As described above, the saponification degree of the ethylene-vinyl alcohol copolymer resin (A-1) is 80 mol% or higher, and by using this type of copolymer resin (A-1), changes in the structure over time and acidification of the aqueous pretreatment liquid can be suppressed. Further, provided the saponification degree of the ethylene-vinyl alcohol copolymer resin (A-1) is 80 mol% or higher, an improvement in the absorption of aqueous inkjet inks arising from the improved hydrophilicity of the ethylene-vinyl alcohol copolymer resin (A-1), and an increase in the strength of printed items due to the formation of hydrogen bonding between hydroxyl groups also occur. From the viewpoint of these effects, namely, from the viewpoint of increasing the storage stability of the aqueous pretreatment liquid, and the viewpoint of

preventing mixed color bleeding in the printed items and improving the abrasion resistance, the saponification degree is preferably 85 mol% or higher, more preferably 90 mol% or higher, and particularly preferably 95 mol% or higher.

In this description, the saponification degree of the ethylene-vinyl alcohol copolymer resin (A-1) can be calculated using formula 4 shown below.

$$\text{Formula 4: (Saponification degree) (mol\%)} = MVAL \div (MVAL + MVAC + MOVE)$$

In formula 4, MVAL is the molar amount (mol%) of vinyl alcohol structural units that exist within the main chain of the ethylene-vinyl alcohol copolymer resin (A-1) molecule, MVAC is the molar amount (mol%) of vinyl acetate structural units that exist within the main chain of the ethylene-vinyl alcohol copolymer resin (A-1) molecule, and MOVE is the molar amount (mol%) of other structural units that exist within the main chain of the ethylene-vinyl alcohol copolymer resin (A-1) molecule. If no vinyl acetate structural units exist within the ethylene-vinyl alcohol copolymer resin (A-1) molecule, then MVAC is zero, and if no other structural units exist, then MOVE is zero.

In cases with synthetic resins, where the types and molar amounts of the polymerizable monomers that constitute the ethylene-vinyl alcohol copolymer resin (A-1) are known, those molar amounts may be simply used as MVAL, MVAC and MOVE in the above formula 3. On the other hand, in the case with commercially available products and the like, where the types and molar amounts of the polymerizable monomers that constitute the ethylene-vinyl alcohol copolymer resin (A-1) are unknown, the types and molar amounts of the polymerizable monomers may be measured, for example by NMR (nuclear magnetic resonance) measurement, and the measured molar amounts then used to calculate the saponification degree in accordance with formula 3.

On the other hand, from the viewpoints of ensuring favorable storage stability for the aqueous pretreatment liquid, and suppressing mixed color bleeding and improving separability by promoting the absorption of aqueous inkjet inks and basic solutions, the degree of ethylene modification of the ethylene-vinyl alcohol copolymer resin (A-1) is preferably within a range from 0.8 to 50 mol%, more preferably from 1.0 to 35 mol%, even more preferably from 1.2 to 20 mol%, particularly preferably from 1.5 to 10 mol%, and especially preferably from 1.8 to 8.0 mol%.

Further, provided the degree of ethylene modification of the ethylene-vinyl alcohol copolymer resin (A-1) falls within the range described above, the glass transition temperature (Tg) of the ethylene-vinyl alcohol copolymer resin (A-1) will be about 60°C or higher. Consequently, when an ethylene-vinyl alcohol copolymer resin having a degree of ethylene modification that falls within the above range is used, in addition to the effects described above, printed items having superior abrasion resistance can also be obtained.

In this description, the degree of ethylene modification of the ethylene-vinyl alcohol copolymer resin (A-1) can be calculated using formula 5 shown below.

$$\text{(Degree of ethylene modification) (mol\%)} = MET \div (MET + MVAL + MVAC + MOVE) \qquad \text{Formula 5:}$$

In formula 5, MET is the molar amount (mol%) of ethylene structural units that exist within the main chain of the ethylene-vinyl alcohol copolymer resin (A-1) molecule, and MVAL, MVAC and MOVE are the same as defined above in formula 4. Further, methods for measuring and calculating MET are also similar to those described above for MVAL, MVAC and MOVE.

From the viewpoint of satisfying a combination of favorable levels for all of the storage stability of the aqueous pretreatment liquid, the separability of printed items from the substrate, and the abrasion resistance of printed items, the polymerization degree of the ethylene-vinyl alcohol copolymer resin (A-1) is preferably within a range from 300 to 3,000, more preferably from 500 to 2,500, and particularly preferably from 700 to 2,000.

In this description, the polymerization degree of the ethylene-vinyl alcohol copolymer resin (A-1) can be calculated using formula 6 shown below.

$$\text{Formula 6: (Polymerization degree)} = MET + MVAL + MVAC + MOVE$$

In formula 6, MET is the same as defined above in formula 5, and MVAL, MVAC and MOVE are the same as defined in formula 4.

The ethylene-vinyl alcohol copolymer resin (A-1) may be synthesized, or a commercially available product may be used. One example of a method for synthesizing the ethylene-vinyl alcohol copolymer resin (A-1) is a method in which an already synthesized or purchased ethylene-vinyl acetate copolymer resin is dissolved in methanol or the like, and a methanol solution of sodium hydroxide or the like is added to saponify the resin. At this time, by controlling the amount of sodium hydroxide added and/or the time for the saponification reaction, the saponification degree described

above can be adjusted as appropriate.

Further, examples of commercially available products of the ethylene-vinyl alcohol copolymer resin (A-1) include the EVAL (a registered trademark) series of products and the EXCEVAL (a registered trademark) series of products manufactured by KURARAY Co., Ltd., and the Soarnol (a registered trademark) series of products manufactured by The Nippon Synthetic Chemical Industry Co., Ltd.

The ethylene-vinyl alcohol copolymer resin (A-1) may exist in a dissolved state in the aqueous pretreatment liquid (namely, a water-soluble resin), or may exist in a dispersed state (namely, an emulsion). In the case of an emulsion, the emulsion of the ethylene-vinyl alcohol copolymer resin (A-1) can be produced by conventionally known methods, for example, by thoroughly mixing a dispersion-stabilizing resin (emulsifying resin) such as a vinyl alcohol resin or an ethylene-vinyl alcohol copolymer resin having a structural unit with an acid group in the main chain, with the ethylene-vinyl alcohol copolymer resin (A-1) in a methanol aqueous solution, subsequently cooling the solution to precipitate the emulsion, and then removing the methanol by distillation under reduced pressure. The ethylene-vinyl alcohol copolymer resin having a structural unit with an acid group in the main chain may be a resin with a saponification degree of 80 mol% or higher, namely, may be a resin that corresponds with the definition of the ethylene-vinyl alcohol copolymer resin (A-1).

In this description, a "water-soluble resin" describes a resin for which a 1% by mass aqueous solution of the subject resin at 20°C appears transparent to the naked eye. Further, an "emulsion" indicates a liquid in which fine particles of the resin are dispersed within an aqueous medium, wherein the term "fine particles" describes a resin other than a water-soluble resin for which the particle size when the volume-based cumulative distribution reaches 50% (median diameter, D50), as measured by the dynamic light scattering method using a particle size distribution analyzer (for example, Nanotrac UPA EX-150 manufactured by MicrotracBEL Corporation), falls within a range from 5 to 1,000 nm.

From the viewpoint of achieving favorable levels for all of the storage stability of the aqueous pretreatment liquid, the separability of printed items from the substrate, and the image quality (prevention of voids and mixed color bleeding) and abrasion resistance of printed items, in those cases where a water-soluble resin is used as the ethylene-vinyl alcohol copolymer resin (A-1), the amount of that water-soluble resin, relative to the total mass of the aqueous pretreatment liquid, is preferably within a range from 0.3 to 10% by mass, more preferably from 0.5 to 8% by mass, and particularly preferably from 0.7 to 6% by mass. On the other hand, in those cases where an emulsion is used as the ethylene-vinyl alcohol copolymer resin (A-1), the amount of the emulsion, relative to the total mass of the aqueous pretreatment liquid, is preferably within a range from 1 to 15% by mass, more preferably from 2 to 12% by mass, and particularly preferably from 2.5 to 10% by mass.

(Other Resin (A-2))

The aqueous pretreatment liquid of the present invention may also contain a resin other than the ethylene-vinyl alcohol copolymer resin (A-1) (hereinafter also referred to as simply the "other resin (A-2)"), provided the effects described above are not impaired. In this description, resins having a base value greater than the acid value do not classify as other resins (A-2), but are rather deemed to correspond with the cationic resins described below.

Specific examples of resins that can be used as the other resin (A-2) include urethane (urea) resins, urethane-(meth)acrylic resins, (meth)acrylic resins, styrene-maleic acid (anhydride) resins, olefin-maleic acid (anhydride) resins, vinyl alcohol-based resins (excluding those resins that correspond with the ethylene-vinyl alcohol copolymer resin (A-1)), cellulose resins, rosin ester resins, rosin phenol resins, terpene phenol resins, polyolefin resins, and polyester resins. One type of resin selected from the group of resins described above may be used as the other resin (A-2), or a combination of two or more types of resin may be used. In this description, the term "urethane (urea)" means urethane or urethane urea, the term (meth)acrylic means acrylic or methacrylic, and the term "maleic acid (anhydride)" means maleic acid or maleic anhydride. However, a (meth)acrylic resin may also include one or more structural units derived from a styrene-based monomer such as styrene, methoxystyrene, vinylstyrene or divinylstyrene.

When one of these other resins (A-2) is used, from the viewpoint of enabling an improvement in the abrasion resistance of the printed items without affecting the storage stability of the aqueous pretreatment liquid, or the image quality or separability of the printed items, the use of one or more resins selected from the group consisting of urethane (meth)acrylic resins, (meth)acrylic resins, polyolefin resins and polyester resins is preferred.

Further, the other resin (A-2) may be in the form of either a water-soluble resin or resin fine particles. In one embodiment, from the viewpoints of achieving high affinity with the subsequently printed aqueous inkjet ink, ensuring disruption of the dispersed state of the components in the aqueous inkjet ink and/or causing a rapid and effective increase in the viscosity of the aqueous inkjet ink, thereby achieving printed items of superior image quality, and also achieving excellent separability of the printed layer, a water-soluble resin is preferably selected as the other resin (A-2). Further, in another embodiment, in terms of improving the abrasion resistance of the printed items and making it easier to prevent any deterioration in the storage stability of the aqueous pretreatment liquid, resin fine particles are preferably selected as the other resin (A-2). A combination of a water-soluble resin and resin fine particles may also be used as the other

resin (A-2).

In those cases where the aqueous pretreatment liquid of the present invention includes the other resin (A-2), from the viewpoint of achieving favorable realization of the effects of the present invention without impairing the effects of the ethylene-vinyl alcohol copolymer resin (A-1), the amount of the other resin (A-2) is preferably no greater than the amount of the ethylene-vinyl alcohol copolymer resin (A-1).

Specifically, when a water-soluble resin is selected as the other resin (A-2), as well as satisfying the conditions for the amount of the resin described above, the amount of the resin relative to the total mass of the aqueous pretreatment liquid is preferably within a range from 0.3 to 10% by mass, more preferably from 0.5 to 8% by mass, and particularly preferably from 0.7 to 5% by mass. On the other hand, when resin fine particles are used as the other resin (A-2), as well as satisfying the conditions for the amount of the resin particles described above, the amount of the resin particles relative to the total mass of the aqueous pretreatment liquid is preferably within a range from 0.5 to 10% by mass, more preferably from 1 to 8% by mass, and particularly preferably from 1.5 to 6% by mass.

<Surfactant (B)>

The aqueous pretreatment liquid of the present invention contains the surfactant (B). Further, the aqueous pretreatment liquid contains the surfactant (B-1) having an HLB value of 9.5 or higher (hereinafter also referred to as the "high HLB value surfactant (B-1)") as the surfactant (B).

As described above, the high HLB value surfactant (B-1) stabilizes the dissolved or dispersed state of the ethylene-vinyl alcohol copolymer resin (A-1), and the high HLB value surfactant (B-1) that exists around the periphery of the ethylene-vinyl alcohol copolymer resin (A-1) prevents the coagulant from approaching, meaning an aqueous pretreatment liquid of high storage stability can be obtained. Further, because of the high HLB value, the high HLB value surfactant (B-1) exhibits good affinity with the liquid droplets of the subsequently printed aqueous inkjet ink. As a result, the wet spreadability of those liquid droplets improve, and diffusion of the coagulant into the interior of the droplets is facilitated, enabling the printed items to be of superior image quality with no voids.

Despite the viewpoints outlined above, if the HLB value of the high HLB value surfactant (B-1) is too high, then the affinity of the high HLB value surfactant (B-1) with water becomes too favorable, which not only raises a concern of a deterioration in the storage stability of the aqueous pretreatment liquid, but also increases the possibility of adverse effects on the abrasion resistance and the separability of printed items. In contrast, if the HLB value is too low, then there is a possibility that the effects described above may not manifest satisfactorily. For these reasons, the HLB value of the high HLB value surfactant (B-1) is preferably within a range from 10 to 18.5, more preferably from 10.5 to 17, and particularly preferably from 11 to 16.

The HLB (Hydrophilic-Lipophilic Balance) value is a value that represents the degree of hydrophilicity of the subject material, and in this description, uses the value calculated using the Griffin method. The Griffin method is a method of calculating the HLB value using formula 7 shown below.

Formula 7: HLB value = 20 × {(sum of the formula weights of hydrophilic portions of the subject material) ÷ (molecular weight of the subject material)}

(High HLB Value Surfactant (B-1))

Any conventionally known material may be used as desired as the high HLB value surfactant (B-1), provided the HLB value calculated using the above formula 7 is 9.5 or higher. Surfactants are generally classified into anionic surfactants, cationic surfactants, nonionic surfactants and amphoteric surfactants. In the case of the aqueous pretreatment liquid of the present invention, from the viewpoints of preventing interactions with the other components besides the high HLB value surfactant (B-1) (namely, the coagulant and the ethylene-vinyl alcohol copolymer resin (A-1) and the like), and ensuring that the effects of these other materials manifest satisfactorily, the use of a nonionic surfactant is preferred. Examples of the nonionic surfactant include acetylene diol-based surfactants, siloxane-based surfactants, fluorine-based surfactants, (poly)oxyalkylene alkyl (phenyl) ether-based surfactants, (poly)oxyalkylene fatty acid ester-based surfactants, (poly)oxyalkylene alkyl amine-based surfactants, (poly)oxyalkylene glycerol fatty acid ester-based surfactants, and (poly)oxyalkylene sorbitan fatty acid ester-based surfactants, and either one, or two or more, of these surfactants may be selected and used as appropriate. Among these surfactants, from the viewpoint of improving the wet spreadability and uniform applicability of the aqueous pretreatment liquid, and preventing maldistribution of the materials other than the high HLB value surfactant (B-1) within the layer of the aqueous pretreatment liquid, thereby enabling stable improvements in the image quality, abrasion resistance and separability of the printed items, and also from the viewpoint of achieving particularly high affinity with aqueous inkjet inks, which can be expected to yield further improvement in the image quality, acetylene diol-based surfactants, (poly)oxyalkylene alkyl ether-based surfactants,

and (poly)oxyalkylene alkyl amine-based surfactants can be used particularly favorably. Further, although the detailed reasons remain unclear, from the viewpoint of achieving dramatic improvements in the storage stability of the aqueous pretreatment liquid and the separability of printed items, the use of a combination of an acetylene diol-based surfactant with a (poly)oxyalkylene alkyl ether-based surfactant and/or a (poly)oxyalkylene alkyl amine-based surfactant is particularly desirable.

The above term "(poly)oxyalkylene" indicates at least one of "oxyalkylene" and "polyoxyalkylene". Further, the above term "alkyl (phenyl) ether" indicates at least one of "alkyl ether" and "alkylphenyl ether".

Examples of acetylene diol-based surfactants include 2,4,7,9-tetramethyl-5-decyn-4,7-diol, 2,5,8,11-tetramethyl-6-dodecyn-5,8-diol, hexadec-8-yn-7,10-diol, 6,9-dimethyl-tetradec-7-yn-6,9-diol, 7,10-dimethylhexadec-8-yn-7,10-diol, as well as ethylene oxide and/or propylene oxide adducts of the above compounds.

Examples of commercially available products of acetylene diol-based surfactants include Surfynol 61, 82, 104E, 104H, 104A, 104BC, 104DPM, 104PA, 104PG-50, 420, 440, 465, 485, DF-110D, SE and SE-F; Dynol 604 and 607; OLFINE E1004, E1010, E1020, PD-001, PD-002W, PD-004, PD-005, EXP. 4001, EXP. 4200, EXP. 4123 and EXP. 4300 (all manufactured by Nissin Chemical Co., Ltd.); and ACETYLENOL E40, E60, E100, E130T and E200 (manufactured by Kawaken Fine Chemicals Co., Ltd.).

Among the various possibilities, from the viewpoint of ensuring an HLB value that falls within the range described above, and achieving suitably high affinity with both the water that represents the main component of the aqueous pretreatment liquid and the subsequently printed aqueous inkjet ink, thereby ensuring stable improvements for all of the storage stability of the aqueous pretreatment liquid, and the image quality, abrasion resistance and separability of printed items, the use of an ethylene oxide adduct of 2,4,7,9-tetramethyl-5-decyn-4,7-diol and/or 2,5,8,11-tetramethyl-6-dodecyn-5,8-diol as the acetylene diol-based surfactant is particularly desirable. Further, the number of moles of ethylene oxide groups added that exist within these compounds is preferably within a range from 4.5 to 30 moles per molecule, more preferably from 7.5 to 30 moles, and particularly preferably from 10 to 30 moles.

Furthermore, compounds represented by general formula 8 and general formula 9 shown below can be used favorably as the (poly)oxyalkylene alkyl ether-based surfactants and (poly)oxyalkylene alkyl amine-based surfactants.

General formula 8: $R^2\text{-O-[(EO)}_m\text{-(PO)}_n\text{]-H}$

In general formula 8, $R^2$ represents a chain-like alkyl group of 6 to 22 carbon atoms which may have branching, or a chain-like alkenyl group of 6 to 22 carbon atoms which may have branching, EO represents an ethylene oxide group, PO represents a propylene oxide group, m represents an integer of 2 to 100, and n represents an integer of 0 to 100. When n is not zero, the order of the $(EO)_m$ and $(PO)_n$ within the square brackets [] is arbitrary, and may be random or in blocks.

[Chemical formula 3]

General formula 9 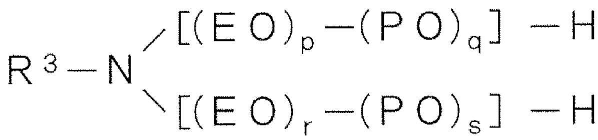

In general formula 9, $R^3$ represents a chain-like alkyl group of 6 to 22 carbon atoms which may have branching, or a chain-like alkenyl group of 6 to 22 carbon atoms which may have branching, EO represents an ethylene oxide group, PO represents a propylene oxide group, p and r each represent an integer of 1 to 100, and q and s each represent an integer of 0 to 100. When q is not zero, the order of the $(EO)_p$ and $(PO)_q$ within the square brackets [ ] is arbitrary, and may be random or blocks. Further, when s is not zero, the order of the $(EO)_r$ and $(PO)_s$ within the square brackets [ ] is arbitrary, and may be random or in blocks.

In addition, compounds represented by general formula 10 shown below can be used as the siloxane-based surfactants.

[Chemical formula 4]

General formula 10

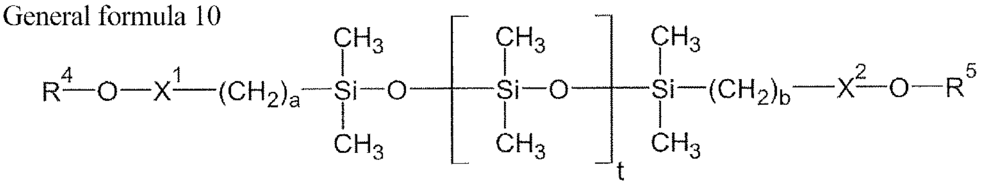

In general formula 10, t represents an integer of 1 to 50, and a and b each represent an integer of 1 to 6. Further, $R^4$ and $R^5$ each represent a hydrogen atom or an alkyl group of 1 to 6 carbon atoms, and $X^1$ and $X^2$ each represent a group represented by general formula 11 shown below.

General formula 11: $-[(EO)_u-(PO)_v]-$

In general formula 11, EO represents an ethylene oxide group, PO represents a propylene oxide group, u represents an integer of 1 to 100, and v represents an integer of 0 to 100. When v is not zero, the order of the $(EO)_u$ and $(PO)_v$ within the square brackets [ ] is arbitrary, and may be random or blocks.

From the viewpoint of ensuring favorable manifestation of the effects of the above high HLB value surfactant (B-1), the amount of the high HLB value surfactant (B-1) in the aqueous pretreatment liquid of the present invention, relative to the total mass of the aqueous pretreatment liquid, is preferably within a range from 0.1 to 10% by mass, more preferably from 0.2 to 8% by mass, and particularly preferably from 0.5 to 5% by mass.

Further, from the viewpoint of ensuring favorable manifestation of the protective effect on the ethylene-vinyl alcohol copolymer resin (A-1), thus obtaining an aqueous pretreatment liquid with particularly superior storage stability, the amount of the high HLB value surfactant (B-1), relative to the amount of the ethylene-vinyl alcohol copolymer resin (A-1), is preferably within a range from 25 to 400% by mass, more preferably from 40 to 300% by mass, and particularly preferably from 50 to 200% by mass.

(Other Surfactant (B-2))

The aqueous pretreatment liquid of the present invention may also contain a surfactant having an HLB value of less than 9.5 (hereinafter also referred to as simply an "other surfactant (B-2)"), provided this does not impair the effects described above.

In those cases where one of these other surfactants (B-2) is used, the use of a nonionic surfactant is preferred for similar reasons to those outlined above for the high HLB value surfactant (B-1), namely, from the viewpoint of preventing interactions with the other materials besides the other surfactant (B-2) (namely, the coagulant and the ethylene-vinyl alcohol copolymer resin (A-1) and the like), and ensuring that the effects of these other materials manifest satisfactorily. Further, among the various nonionic surfactants, one or more surfactants selected from the group consisting of acetylene diol-based surfactants, (poly)oxyalkylene alkyl ether-based surfactants, and (poly)oxyalkylene alkyl amine-based surfactants can be used particularly favorably. Although these surfactants have a low HLB value of less than 9.5, they exhibit high hydrophilicity compared with other types of surfactants, and are suitably compatible with both the water of the aqueous pretreatment liquid and the subsequently printed aqueous inkjet ink, thereby ensuring an aqueous pretreatment liquid can be obtained that exhibits excellent levels for all of the storage stability, and the image quality, abrasion resistance and separability of printed items.

In those cases where the aqueous pretreatment liquid of the present invention includes the other surfactant (B-2), from the viewpoint of ensuring favorable manifestation of the effects of the present invention with no impairment of the effects of the high HLB value surfactant (B-1), the amount of the other surfactant (B-2) is preferably no greater than the amount of the high HLB value surfactant (B-1). Specifically, the amount of the other surfactant (B-2) relative to the total mass of the aqueous pretreatment liquid is preferably within a range from 0.01 to 5% by mass, more preferably from 0.02 to 3% by mass, and particularly preferably from 0.03 to 2% by mass.

Further, for similar reasons to those outlined above concerning the amount of the other surfactant (B-2), in those cases where the aqueous pretreatment liquid of the present invention includes the other surfactant (B-2), the ratio between the amount of the high HLB value surfactant (B-1) and the amount of the other surfactant (B-2) (amount of high HLB value surfactant (B-1) ÷ amount of other surfactant (B-2)) is preferably within a range from 1 to 300, more preferably from 2 to 200, even more preferably from 5 to 150, and particularly preferably from 10 to 100.

<Coagulant>

The aqueous pretreatment liquid of the present invention contains a coagulant. Any conventionally known materials may be used as the coagulant, provided the material is capable of disrupting the dispersed state of the pigment and resin that exist within the jointly used aqueous inkjet ink, and/or inducing an interaction with the components in the aqueous inkjet ink that causes an increase in the viscosity of the aqueous inkjet ink. Specifically, one or more materials selected from the group consisting of polyvalent metal salts, cationic resins and metal complexes may be used. Among these materials, in terms of being unlikely to cause insolubilization of the ethylene-vinyl alcohol copolymer resin (A-1) when the ethylene-vinyl alcohol copolymer resin (A-1) and the high HLB value surfactant (B-1) are used in combination, enabling an aqueous pretreatment liquid of excellent storage stability to be obtained, in terms of exhibit as superior ability to disrupt the dispersed state of the components in the aqueous inkjet ink and cause an increase in the viscosity of the aqueous inkjet ink, enabling printed items of particularly superior image quality to be obtained, in terms of suppressing stickiness and improving the abrasion resistance of the printed item surface, and in terms of lowering the likelihood of causing adverse effects when the printed layer is separated from the substrate, the use of a polyvalent metal salt is particularly desirable.

(Polyvalent Metal Salt)

A single type of polyvalent metal salt may be used alone, or a combination of two or more types of polyvalent metal salt may be used. Further, there are no particular limitations on the combination of the polyvalent metal ion and the counter anion that constitute the polyvalent metal salt, and conventionally known materials can be used. Among the various possibilities, polyvalent metal salts formed from a divalent metal ion exhibit excellent balance between the ability to disrupt the dispersed state of the components of the aqueous inkjet ink and increase the viscosity of the aqueous inkjet ink, and the wet spreadability of the liquid droplets of the aqueous inkjet ink, thus enabling the production of printed items of excellent image quality, with no voids or mixed color bleeding, regardless of the type of image that is printed, and can therefore be used particularly favorably in the aqueous pretreatment liquid of the present invention. Further, although the detailed reasons remain unclear, polyvalent metal salts formed from a divalent metal ion are less likely to cause adverse effects when the printed layer is separated from the substrate, enabling printed items of superior separability to be obtained.

Examples of divalent metal ions that may be used include calcium ions, magnesium ions, zinc (II) ions, and iron (II) ions. Among these, in terms of producing printed items of excellent image quality, with no voids or mixed color bleeding, calcium ions can be used particularly favorably.

On the other hand, examples of the counter anion in the case where the calcium ion is selected as the polyvalent metal ion include the chloride ion (75 g), iodide ion (66 g), nitrate ion (121 g), formate ion (17 g), acetate ion (28 g), propionate ion (38 g), butyrate ion (17 g), benzoate ion (2 g), lactate ion (9 g), gluconate ion (3 g) and pantothenate ion (35 g). The values within the parentheses ( ) represents the solubility of the corresponding anhydrous calcium salt in 100 g of water at 20°C.

In those cases here a polyvalent metal salt is used as the coagulant, in terms of enabling the coagulant to dissolve and diffuse rapidly through the subsequently printed aqueous inkjet ink, enabling printed items of excellent image quality with no mixed color bleeding to be obtained, in terms of suppressing excessive absorption of moisture from the atmosphere, thus ensuring printed items with excellent abrasion resistance, and in terms of being eluted rapidly, resulting in no adverse effects when the printed layer is separated from the substrate, the use of a polyvalent metal salt that exhibits a solubility in 100 g of water at 20°C within a range from 10 to 150 g is preferred, the use of a polyvalent metal with a solubility of 30 to 150 g is more preferred, and the use of a polyvalent metal with a solubility of 50 to 150 g is particularly desirable.

Based on the viewpoints outlined above, in those cases where a calcium ion salt is used as the polyvalent metal salt, the selection of calcium chloride, calcium iodide or calcium nitrate is preferred.

On the other hand, from the viewpoint of achieving superior affinity with the ethylene-vinyl alcohol copolymer resin (A-1) and obtaining an aqueous pretreatment liquid of excellent storage stability with no precipitation, and also from the viewpoint of achieving superior affinity with basic solutions and not inhibiting swelling of the pretreatment layer, thus enabling an improvement in the separability of the printed items, the selection of a counter anion having an oxygen atom is preferred, and among the various possibilities, selection of a counter anion having a hydroxyl group and/or a carboxyl group is particularly preferred. On the basis of this viewpoint, examples of counter anions that can be used particularly favorably from among the counter anions listed above include a nitrate ion, formate ion, acetate ion, propionate ion, butyrate ion, benzoate ion, lactate ion, gluconate ion and pantothenate ion.

A single type of the polyvalent metal salt may be used alone, or a combination of two or more types of polyvalent metal salt may be used. Further, from the viewpoint of achieving a combination of favorable levels for all of the image quality, abrasion resistance and separability of the printed items, as well as the storage stability of the aqueous pretreatment liquid, the amount of the polyvalent metal salt relative to the total mass of the aqueous pretreatment liquid is preferably within a range from 0.5 to 40% by mass, more preferably from 1 to 35% by mass, even more preferably from 2.5 to 30% by mass, and particularly preferably from 5 to 25% by mass. This amount of the polyvalent metal salt represents the amount of the anhydrous salt, and in the case of a polyvalent metal salt containing hydrated water, the amount is calculated by subtracting the mass of the hydrated water.

(Cationic Resin)

In those cases where a cationic resin is used as the coagulant, resins having a cationic group such as an amino group, quaternary ammonium group, amide group, or ureido group or the like may be used as appropriate. Further, either a water-soluble resin or resin fine particles may be used as the cationic resin.

Among the various possibilities, from the viewpoint of achieving overall improvements in the image quality, abrasion resistance and separability of the printed items, cationic resins having a base value within a range from 5 to 700 mgKOH/g can be used favorably. Further, from the viewpoint of achieving a combination of favorable storage stability for the aqueous pretreatment liquid and superior image quality, the base value is more preferably within a range from 20 to 600 mgKOH/g, even more preferably from 30 to 500 mgKOH/g, and particularly preferably from 40 to 450 mgKOH/g.

In this description, the "base value" of a resin represents the number of mg of KOH equivalent to the amount of hydrochloric acid required to neutralize the cationic functional groups contained in 1 g of the resin, and can be measured, for example, using a potentiometric titration method. Specifically, using a potentiometric titrator AT-610 manufactured by Kyoto Electronics Manufacturing Co., Ltd., the resin is dissolved in a mixed solvent of ethanol and toluene, and a titration is then performed using a 0.1 mol/L solution of hydrochloric acid in ethanol, with the base value then being calculated from the thus obtained titration curve.

Further, in order to improve the separability of the printed layer from the substrate, a cationic resin having an acid group may also be used. In this case, from the viewpoint of achieving a combination of superior image quality, abrasion resistance and separability for the printed items, the acid value of the above cationic resin is preferably smaller than the base value of the cationic resin.

In this description, the "acid value" of a resin represents the number of mg of potassium hydroxide required to neutralize the acid groups contained in 1 g of the resin, and can be measured, for example, using a potentiometric titration method. Specifically, using a potentiometric titrator AT-610 manufactured by Kyoto Electronics Manufacturing Co., Ltd., the resin is dissolved in a mixed solvent of ethanol and toluene, and a titration is then performed using a 0.1 mol/L solution of potassium hydroxide in ethanol, with the acid value then being calculated from the thus obtained titration curve.

In those cases where the aqueous pretreatment liquid of the present invention contains a cationic resin as the coagulant, in terms of obtaining printed items having superior image quality and abrasion resistance, and also obtaining a aqueous pretreatment liquid having favorable storage stability, a cationic resin for which a 5% by mass aqueous solution of the resin at 20°C appears transparent to the naked eye is preferably selected.

Furthermore, in terms of improving the image quality and abrasion resistance of the printed items, and in terms of obtaining an aqueous pretreatment liquid of excellent storage stability in which the resin is unlikely to undergo any interaction with the ethylene-vinyl alcohol copolymer resin (A-1), resins containing a diallylamine structural unit and/or a diallylammonium structural unit can be used particularly favorably. Cationic resins containing a diallylammonium structural unit are particularly desirable in terms of achieving excellent balance between the ability to disrupt the dispersed state of the components of the aqueous inkjet ink and increase the viscosity of the aqueous inkjet ink, and the wet spreadability of the liquid droplets of the aqueous inkjet ink, thus facilitating the production of printed items with no voids or mixed color bleeding, and in terms of being less likely to undergo interactions with the ethylene-vinyl alcohol copolymer resin (A-1), thus improving the storage stability of the aqueous pretreatment liquid. In terms of ease of availability and the like, the chloride salts or ethyl sulfate salts of diallyldimethylammonium and/or diallylmethylethylammonium ions may be selected particularly favorably.

Examples of commercially available products of cationic resins containing a diallylammonium structural unit include PAS-H-1L, PAS-H-5L, PAS-24, PAS-84, PAS-J-81L, PAS-J-81 and PAS-J-41, PAS-880, PAS-2351 and PAS-2451 (manufactured by Nittobo Medical Co., Ltd.); and Unisense FPA100L, FPA101L, FPA102L, FPA1000L, FPA1001L, FCA1000L, FCA1001L, FCA1002L, FCA1003L, FCA5000L, ZCA1000L, ZCA1001L and ZCA1002L (manufactured by Senka Corporation).

A single type of cationic resin may be used alone, or a combination of two or more types may be used. Further, from the viewpoint of achieving a combination of favorable levels for all of the image quality, abrasion resistance and separability of the printed items, the amount of the above cationic resin, relative to the total mass of the aqueous pretreatment liquid, is preferably within a range from 1 to 30% by mass, more preferably from 2 to 20% by mass, and particularly preferably from 2.5 to 15% by mass.

(Metal Complex)

In those cases where a metal complex is used as the coagulant, a complex of at least one metal element selected from the group consisting of zirconium, aluminum and titanium is preferred. Further, the ligands are preferably at least one type of ligand selected from the group consisting of acetate, acetylacetonate, methylacetoacetate, ethylacetoacetate, octylene glycolate, butoxyacetylacetonate, lactate, ammonium lactate, and triethanolaminate.

One of these compounds may be used alone, or a combination of two or more such compounds may be used. Further, from the viewpoint of improving the image quality of the printed items, the amount of the metal complex relative to the total mass of the aqueous pretreatment liquid is preferably within a range from 0.1 to 15% by mass, more preferably from 0.5 to 10% by mass, and particularly preferably from 1 to 5% by mass.

<Water-Soluble Organic Solvent (C)>

The aqueous pretreatment liquid of the present invention contains the water-soluble organic solvent (C), and that water-soluble organic solvent includes a water-soluble organic solvent (C-1) containing at least one hydroxyl group within the molecular structure. As mentioned above, the water-soluble organic solvent (C-1) exhibits superior affinity with all of the ethylene-vinyl alcohol copolymer resin (A-1), the surfactant (B-1) having an HLB value of 9.5 or higher, and the water contained in the aqueous pretreatment liquid of the present invention. As a result, the diffusion of these materials throughout the aqueous pretreatment liquid becomes more uniform, resulting in an improvement in the image quality and separability of the printed items, and the storage stability of the aqueous pretreatment liquid can also be improved.

In this description, the expression "water-soluble organic solvent" describes an organic compound that is liquid at 25°C and has a solubility of at least 1% by mass in 25°C water.

<Water-Soluble Organic Solvent (C-1)>

In the aqueous pretreatment liquid of the present invention, either one conventionally known compound may be used alone, or a combination of two or more compounds may be used, as the water-soluble organic solvent (C-1) containing at least one hydroxyl group within the molecular structure. There are no particular limitations on the types of water-soluble organic solvents (C-1) that may be used, and conventional compounds may be used as applicable.

Examples of the water-soluble organic solvent (C-1) containing at least one hydroxyl group within the molecular structure include:

monohydric alcohol-based solvents such as methanol, ethanol, 1-propanol, 2-propanol, 1-butanol and 2-butanol;
dihydric alcohol (glycol)-based solvents such as 1,2-ethanediol, 1,2-propanediol, 1,3-propanediol, 1,2-butanediol, 1,3-butanediol, 1,4-butanediol, 2,3-butanediol, 1,2-pentanediol, 1,5-pentanediol, 1,2-hexanediol, 1,6-hexanediol, 1,2-heptanediol, 2,2-dimethyl-1,3-propanediol, 2-methyl-1,3-propanediol, 2-ethyl-2-methyl-1,3-propanediol, 3-methyl-1,3-butanediol, 3-methyl-1,5-pentanediol, 2-methyl-2-propyl-1,3-propanediol, 2-methylpentan-2,4-diol, 2-ethyl-1,3-hexanediol, 1,2-octanediol, diethylene glycol, triethylene glycol, tetraethylene glycol, polyethylene glycol #200, polyethylene glycol #400, dipropylene glycol, tripropylene glycol and dibutylene glycol;
glycol monoalkyl ether-based solvents such as ethylene glycol monoethyl ether, ethylene glycol monobutyl ether, diethylene glycol monomethyl ether, diethylene glycol monoethyl ether, diethylene glycol monopropyl ether, diethylene glycol monobutyl ether, diethylene glycol monopentyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, 1,2-butylene glycol monomethyl ether, 2-methoxy-1-butanol, 3-methoxy-1-butanol, and 3-methyl-3-methoxy-1-butanol;
chain-like polyol-based solvents such as glycerol, trimethylolpropane, 1,2,4-butanetriol, 1,2,6-hexanetriol, diglycerol and polyglycerol; and
hydroxyl group-containing chain-like nitrogen-containing compounds such as dimethylaminoethanol, diethylaminoethanol, monoethanolamine, diethanolamine, methyldiethanolamine, ethyldiethanolamine, triethanolamine and aminomethylpropanol.

Further, in order to achieve even more favorable manifestation of the uniform diffusion effect mentioned above, it is preferable that among the various materials included in the aqueous pretreatment liquid of the present invention,

the blend ratio between the ethylene-vinyl alcohol copolymer resin (A-1), which has a large molecular weight and is resistant to diffusion, and the water-soluble organic solvent (C-1) is prescribed. Specifically, the ratio of the respective amounts represented by [amount of the water-soluble organic solvent (C-1) (% by mass): amount of the ethylene-vinyl alcohol copolymer resin (A-1) (% by mass)] is preferably within a range from 1:0.1 to 1:3.0. By restricting the amounts in this manner, the ethylene-vinyl alcohol copolymer resin (A-1) can be dispersed more uniformly throughout the aqueous pretreatment liquid, and a further improvement in the abrasion resistance and image quality of the printed items (and particularly the prevention of mixed color bleeding due to absorption of the aqueous inkjet ink), and a further improvement in the separability can be realized. Furthermore, from the viewpoint of further enhancing the uniform diffusion effect on the ethylene-vinyl alcohol copolymer resin (A-1), enabling printed items of superior image quality, separability and abrasion resistance to be obtained, the amount (% by mass) of the ethylene-vinyl alcohol copolymer resin (A-1), expressed relative to an amount (% by mass) of the water-soluble organic solvent (C-1) that is deemed to be 1, is more preferably within a range from 0.2 to 2.0, and particularly preferably from 0.3 to 1.6.

<Other Water-Soluble Organic Solvent (C-2)>

The aqueous pretreatment liquid of the present invention may also contain a water-soluble organic solvent (hereinafter also referred to as an "other water-soluble organic solvent (C-2)") other than the above water-soluble organic solvent (C-1). In such cases, from the viewpoint of ensuring favorable manifestation of the effects of the water-soluble organic solvent (C-1), the amount of the water-soluble organic solvent (C-1), relative to the total amount of all the water-soluble organic solvents, is preferably at least 50% by mass, more preferably at least 70% by mass, and particularly preferably 90% by mass or greater.

Examples of water-soluble organic solvents that may be used as the other water-soluble organic solvent (C-2) include:

glycol dialkyl ether-based solvents such as diethylene glycol dimethyl ether, diethylene glycol methyl ethyl ether, diethylene glycol butyl methyl ether, diethylene glycol diethyl ether, triethylene glycol dimethyl ether, triethylene glycol methyl ethyl ether, triethylene glycol butyl methyl ether, triethylene glycol diethyl ether, tetraethylene glycol dimethyl ether, tetraethylene glycol methyl ethyl ether, tetraethylene glycol butyl methyl ether, and tetraethylene glycol diethyl ether;

non-hydroxyl group-containing chain-like nitrogen-containing compounds such as trimethylamine, triethylamine and butylamine;

heterocyclic compounds such as 2-pyrrolidone, N-methylpyrrolidone, N-ethylpyrrolidone, ε-caprolactam, 3-methyl-2-oxazolidinone, 3-ethyl-2-oxazolidinone, γ-butyrolactone, γ-valerolactone, δ-valerolactone, ε-caprolactone, and morpholine; and

chain-like amide-based solvents such as N,N-dimethyl-β-methoxypropionamide, N,N-dimethyl-β-ethoxypropionamide, N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, and N,N-diethyl-β-octoxypropionamide.

The amount of the water-soluble organic solvent (C) within the aqueous pretreatment liquid, relative to the total mass of the aqueous pretreatment liquid, is preferably within a range from 1 to 40% by mass, more preferably from 1.5 to 30% by mass, and particularly preferably from 2 to 25% by mass. Provided the amount of the water-soluble organic solvent (C) falls within this range, the ethylene-vinyl alcohol copolymer resin (A-1) can be dispersed uniformly within the aqueous pretreatment liquid, resulting in an improvement in the image quality and separability of the printed items, and an improvement in the storage stability of the aqueous pretreatment liquid can also be realized. As outlined above, when prescribing the amount of the water-soluble organic solvent (C), it is particularly desirable to also take into consideration the ratio between the amount of the water-soluble organic solvent (C-1) and the amount of the ethylene-vinyl alcohol copolymer resin (A-1).

In the aqueous pretreatment liquid of the present invention, from the viewpoint of improving the wet spreadability and drying properties of the aqueous pretreatment liquid, thereby improving the image quality and separability of the printed items, and also from the viewpoint of facilitating uniform diffusion of the high HLB value surfactant (B-1) through the aqueous pretreatment liquid, thus achieving a further improvement in storage stability, the use of water-soluble organic solvents which, regardless of whether being the water-soluble organic solvent (C-1) or the other water-soluble organic solvent (C-2), exhibit a static surface tension at 25°C within a range from 20 to 45 mN/m is preferred, the use of water-soluble organic solvents for which this static surface tension is from 20 to 38 mN/m is more preferred, and the use of water-soluble organic solvents for which this static surface tension is from 20 to 32 mN/m is particularly desirable. Moreover, from the viewpoint of improving the image quality, abrasion resistance and separability of the printed items,

the use of water-soluble organic solvents which, regardless of whether being the water-soluble organic solvent (C-1) or the other water-soluble organic solvent (C-2), have a boiling point at one atmosphere within a range from 75 to 200°C is preferred, the use of water-soluble organic solvents for which this boiling point is from 75 to 185°C is more preferred, and the use of water-soluble organic solvents for which this boiling point is from 75 to 160°C is particularly desirable.

In this description, the static surface tension represents the value measured at 25°C based on the Wilhelmy method. Specifically, the static surface tension can be measured, for example, using an DY-300 apparatus manufactured by Kyowa Interface Science Co., Ltd., under an atmosphere at 25°C using a platinum plate.

Moreover, in the aqueous pretreatment liquid of the present invention, the amount of water-soluble organic solvents having a boiling point at one atmosphere of 230°C or higher, relative to the total mass of the aqueous pretreatment liquid, is preferably not more than 5% by mass (and may be 0% by mass), more preferably not more than 3% by mass (and may be 0% by mass), and particularly preferably 2% by mass or less (and may be 0% by mass). By ensuring that the aqueous pretreatment liquid either contains no water-soluble organic solvent with a boiling point of 230°C or higher, or even if present, contains such solvents in an amount within the above range, printed items having superior abrasion resistance and image quality can be obtained, and an aqueous pretreatment liquid with satisfactory drying properties is obtained.

Further, for similar reasons to those outlined above, in addition to ensuring that the amount of water-soluble organic solvents having a boiling point at one atmosphere of 230°C or higher is less than 5% by mass relative to the total mass of the aqueous pretreatment liquid, the amount of water-soluble organic solvents having a boiling point at one atmosphere of 200°C or higher, relative to the total mass of the aqueous pretreatment liquid, is preferably not more than 10% by mass (and may be 0% by mass), more preferably not more than 5% by mass (and may be 0% by mass), even more preferably not more than 3% by mass (and may be 0% by mass), and particularly preferably 2% by mass or less (and may be 0% by mass).

<Water>

The amount of water contained in the aqueous pretreatment liquid of the present invention, relative to the total mass of the aqueous pretreatment liquid, is preferably within a range from 50 to 95% by mass, more preferably from 55 to 90% by mass, and particularly preferably from 60 to 85% by mass. Water is an essential material for the dissolution or dispersion of the ethylene-vinyl alcohol copolymer resin (A-1). Further, by including at least 50% by mass of water, the mutual solubility of the essential materials of the aqueous pretreatment liquid of the present invention such as the ethylene-vinyl alcohol copolymer resin (A-1), the high HLB value surfactant (B-1), the water-soluble organic solvent (C-1) and the coagulant can be enhanced, thus improving the storage stability of the aqueous pretreatment liquid.

<Other Materials>

Besides the materials described above, the aqueous pretreatment liquid of the present invention may, if necessary, also contain other added materials such as pH adjusters, colorants, thickeners, crosslinking agents, and preservatives and the like.

(pH Adjuster)

For example, the aqueous pretreatment liquid of the present invention may include a pH adjuster from the viewpoints of reducing damage to the components within the device (aqueous pretreatment liquid coating device) used for applying the aqueous pretreatment liquid, and improving the storage stability of the aqueous pretreatment liquid by suppressing variations in the pH over time and preventing changes in the structure of the ethylene-vinyl alcohol copolymer resin (A-1). There are no particular limitations on the materials that may be used as the pH adjuster, and either a single material or a combination of two or more materials may be used.

Specifically, in those cases where the pretreatment liquid needs to be made more acidic, examples of materials that may be used as the pH adjuster include organic acids such as formic acid, acetic acid, propionic acid, malonic acid, succinic acid, glutaric acid, maleic acid, fumaric acid, glycolic acid, lactic acid, tartronic acid, glyceric acid, malic acid, tartaric acid, citric acid, benzoic acid and phthalic acid; and inorganic acids such as hydrochloric acid, sulfuric acid, phosphoric acid and boric acid. Further, in those cases where the pretreatment liquid needs to be made more basic, examples of materials that may be used as the pH adjuster include the hydroxyl group-containing chain-like nitrogen-containing compounds and other chain-like nitrogen-containing compounds described above; ammonia water; alkali metal hydroxides such as lithium hydroxide, sodium hydroxide and potassium hydroxide; and alkali metal carbonates such as lithium carbonate, sodium carbonate, sodium hydrogen carbonate and potassium carbonate.

In those cases where the aqueous pretreatment liquid is printed onto the substrate using an inkjet printing method, in order to suppress any adverse effects on other materials arising from changes in pH associated with drying

of the water in the vicinity of the inkjet nozzles (and suppress nozzle blockages arising from those adverse effects), and to maintain a high level of productivity, and enable the effects of the present invention to be obtained in a continuous manner, the incorporation of a solvent having a boiling point equal to or higher than that of water is desirable. On the other hand, in order to enhance the abrasion resistance of the printed items, while preventing any adverse effects on the image quality, the use of materials that are unlikely to be retained in the printed items is preferred. From these viewpoints, for example in those cases where the aqueous pretreatment liquid needs to be made more basic, monoethanolamine, N-methyldiethanolamine, dimethylaminoethanol, diethylaminoethanol, and aminomethylpropanol can be used particularly favorably.

On the other hand, in another preferred embodiment, from the viewpoint of suppressing changes in the pH over time, and preventing changes in the structure of the ethylene-vinyl alcohol copolymer resin (A-1), thereby improving the storage stability of the aqueous pretreatment liquid, it is preferable that a combination of an ethanolamine-based solvent with an inorganic acid and/or organic acid, or alternatively, a combination of a weak acid and a salt of that weak acid or the like used, thereby generating a buffering capability. Examples of the ethanolamine-based solvent include monoethanolamine, diethanolamine, triethanolamine, dimethylaminoethanol and diethylaminoethanol from among the hydroxyl group-containing chain-like nitrogen-containing compounds mentioned above. Further, the above salt of a weak acid may be a material that also functions as the polyvalent metal salt described above, or may be, for example, a combination of acetic acid and calcium acetate.

From the viewpoint of ensuring effective manifestation of the effects outlined above, the blend amount of the pH adjuster, relative to the total mass of the aqueous pretreatment liquid, is preferably within a range from 0.01 to 5% by mass, and more preferably from 0.05 to 3% by mass.

<Colorant>

The aqueous pretreatment liquid of the present invention preferably contains substantially no colorants such as pigments or dyes. By using a substantially transparent aqueous pretreatment liquid that contains no colorants, printed items that retain the characteristic color or transparency of the substrate can be obtained. In the present description, the expression "contains substantially no ~" means that those cases where the material is intentionally added in an amount that impairs the effects of the present invention are excluded, but for example, those cases where unintended impurities and/or by-products are incorporated in the aqueous pretreatment liquid are not excluded. Specifically, the expression refers to those cases where the amount of the material in question, relative to the total mass of the aqueous pretreatment liquid, is not more than 2.0% by mass, preferably not more than 1.0% by mass, even more preferably not more than 0.5% by mass, and particularly preferably 0.1% by mass or less.

On the other hand, in another preferred embodiment, the aqueous pretreatment liquid preferably contains a white pigment as a colorant. By using a white aqueous pretreatment liquid on colored and/or transparent substrates, printed items of favorable image quality, having excellent clarity and legibility can be obtained. In those cases where the aqueous pretreatment liquid contains a white pigment, any conventionally known material such as titanium oxide may be used as the white pigment.

<Physical Properties of the Aqueous Pretreatment Liquid>

The aqueous pretreatment liquid of the present invention has a viscosity at 25°C that is preferably within a range from 5 to 200 mPa·s, more preferably from 5 to 180 mPa·s, even more preferably from 8 to 160 mPa s, and particularly preferably from 8 to 140 mPa s. An aqueous pretreatment liquid that satisfies the above viscosity range can be applied without surface irregularities to a variety of substrates, and therefore printed items having excellent image quality and abrasion resistance can be obtained. The viscosity of the aqueous pretreatment liquid can be measured in accordance with the viscosity of the treatment liquid, for example using either an E-type viscometer (TVE25L viscometer, manufactured by Toki Sangyo Co., Ltd.) or a B-type viscometer (TVB 10 viscometer, manufactured by Toki Sangyo Co., Ltd.).

Further, from the viewpoint of achieving favorable wet spreadability on a variety of substrates, thereby enabling the formation of a uniform pretreatment layer with no surface irregularities and obtaining printed items having excellent image quality, abrasion resistance, and separability of layers formed from aqueous inkjet inks, the static surface tension of the aqueous pretreatment liquid of the present invention is preferably within a range from 20 to 40 mN/m, more preferably from 21 to 37 mN/m, and particularly preferably from 22 to 35 mN/m. In this description, the static surface tension can be measured in the same manner as that described above for the surface tension of the water-soluble organic solvent (C).

<Method for Producing Aqueous Pretreatment Liquid>

The aqueous pretreatment liquid of the present invention composed of the components described above can be produced, for example, by combining the ethylene-vinyl alcohol copolymer resin (A-1), the high HLB value surfactant (B-1), the water-soluble organic solvent (C-1) and the coagulant, and if necessary any of the other materials described above such as a pH adjuster and a preservative, and after performing stirring and mixing, and then filtering the resulting mixture if required. However, the method for producing the aqueous pretreatment liquid is not limited to this method. For example, in those cases where a white pigment is used as a colorant, a white pigment dispersion containing the white pigment and water may be prepared in advance, and subsequently mixed with the ethylene-vinyl alcohol copolymer resin (A-1), the high HLB value surfactant (B-1) and the coagulant. During stirring and mixing, the mixture may be heated at a temperature within a range from 35 to 100°C if necessary.

<Aqueous Inkjet Ink>

The aqueous pretreatment liquid of the present invention may be used in the form of an ink set, by combining the aqueous pretreatment liquid with at least one type of aqueous inkjet ink. The aqueous inkjet ink preferably contains a pigment, a resin and water. Further, the aqueous inkjet ink may also contain a water-soluble organic solvent or a surfactant or the like.

In terms of obtaining printed items of superior image quality with excellent color development and light resistance, and also in terms of enabling uncolored recycled substrates or the like to be obtained, with no elution of the colorant into the basic solution during separation, examples of pigments that can be used favorably include blue pigments such as C.I. Pigment Blue 15:3 and 15:4; red pigments such as C.I. Pigment Red 122, 150, 166, 185, 202, 209, 266, 269 and 282, and C.I. Pigment Violet 19; yellow pigments such as C.I. Pigment Yellow 12, 13, 14, 74, 120, 180, 185 and 213; black pigments such as carbon black; and white pigments such as titanium oxide.

Further, the aqueous inkjet ink preferably includes, as the resin, the type of pigment dispersing resin typically used for dispersing the above pigment, and/or the type of binder resin used for binding the pretreatment layer, and including at least a binder resin is particularly desirable. It is also possible that imparting a pigment dispersing resin with the function of a binder resin, and without blending substantially any resin that functions solely as a binder resin. In such cases, in order to ensure this function as a binder resin, a resin with a glass transition temperature within a range from 35 to 75°C is preferably added in a blend amount at least as large as that of the pigment.

The glass transition temperature of a resin may be calculated from the composition of polymerizable monomers that constitute the resin, or may be measured experimentally. An example of the formula used to calculate the glass transition temperature from the composition of polymerizable monomers that constitute the resin is shown below in formula 12.

$$\text{Formula 12: (Glass transition temperature) (°C)} = 1 \div [\Sigma\{WAi \div (Tgi + 273.2)\}] - 273.2$$

In formula 12, WAi represents the amount (% by mass) of a polymerizable monomer i relative to the total mass of all the polymerizable monomers that constitute the resin, and Tgi represents the glass transition temperature (°C) of a homopolymer of that polymerizable monomer i.

Further, in one example of the method used for experimentally measuring the glass transition temperature of a resin, a sample of approximately 10 mg is subjected to thermal analysis using a differential scanning calorimeter DSC-60 Plus manufactured by Shimadzu Corporation, under a nitrogen atmosphere and under conditions including a rate of temperature increase of 10°C/minute. Following completion of the measurement, the glass transition temperature is read from the resulting DSC curve.

A resin selected from the group consisting of (meth)acrylic resins, urethane (urea) resins and polyester resins can be used favorably as the above pigment dispersing resin and/or binder resin. Further, in addition to these resins, polyolefin resin fine particles may also be used. By combining these resins, the abrasion resistance and the adhesion with the pretreatment layer can be dramatically improved without causing any adverse effects on the image quality or separability of the printed items. In one embodiment, when a combination of a resin selected from the group consisting of (meth)acrylic resins, urethane (urea) resins and polyester resins, and polyolefin resin fine particles is used, the blend amount of the polyolefin resin fine particles relative to the blend amount of the resin selected from the group consisting of (meth)acrylic resins, urethane (urea) resins and polyester resins is preferably within a range from 10 to 100% by mass, and more preferably from 20 to 80% by mass. By ensuring a ratio within this range, the effects of the polyolefin resin fine particles can manifest favorably without impairing the functions provided by the resin selected from the group consisting of (meth)acrylic resins, urethane (urea) resins and polyester resins.

Further, the pigment dispersing resin and/or binder resin described above may have one or more acid groups,

and in such cases, those acid groups may be neutralized with a neutralizing agent. Examples of neutralizing agents that may be used for this neutralization include amines such as ammonia, trimethylamine, triethylamine, butylamine, dimethylaminoethanol, diethylaminoethanol, diethanolamine, triethanolamine, aminomethylpropanol and morpholine, and hydroxides such as potassium hydroxide and sodium hydroxide.

On the other hand, when the layer formed from the aqueous inkjet ink is separated from the printed item, if the layer formed from the aqueous inkjet ink is dissolved in an excessive amount of a basic solution, then the remaining substrate or the like after the separation tends to be colored by the pigment contained in the aqueous inkjet ink. Accordingly, ensuring that the layer formed from the aqueous inkjet ink is resistant to dissolution in the basic solution is preferable from the viewpoint of improving the separability. Further, from this same viewpoint, it is preferable that an amine having a boiling point at one atmosphere of 170°C or lower, such as ammonia, trimethylamine, triethylamine, butylamine, dimethylaminoethanol, diethylaminoethanol or aminomethylpropanol, is used as the above neutralizing agent, and the use of an amine having a boiling point at one atmosphere of 140°C or lower is particularly desirable.

In those cases where the aqueous inkjet ink contains a water-soluble organic solvent, the same compounds as those described above for use as the water-soluble organic solvent (C) contained in the aqueous pretreatment liquid may be used. In such cases, when the aqueous inkjet ink is used in combination with the aqueous pretreatment liquid of the present invention, from the viewpoints of obtaining printed items of excellent image quality with no mixed color bleeding even during highspeed printing, and also achieving excellent abrasion resistance for the printed items and superior jetting stability for the aqueous inkjet ink, the weighted average boiling point at one atmosphere of the water-soluble organic solvents contained in the aqueous inkjet ink is preferably within a range from 145 to 215°C, more preferably from 150 to 200°C, and particularly preferably from 155 to 190°C. Further, when the aqueous inkjet ink is used in combination with the aqueous pretreatment liquid of the present invention, from the viewpoint of obtaining printed items having no image quality defects such as mixed color bleeding, and also having favorable abrasion resistance, the amount of water-soluble organic solvent having a boiling point at one atmosphere of 220°C or higher, relative to the total mass of the aqueous inkjet ink, is preferably not more than 5% by mass (and may be 0% by mass), more preferably not more than 2% by mass (and may be 0% by mass), and particularly preferably 1% by mass or less (and may be 0% by mass). From these viewpoints, when a water-soluble organic solvent is included in the aqueous inkjet ink, a compound which is selected from among the compounds mentioned above that can be used as the water-soluble organic solvent (C) that may be included in the aqueous pretreatment liquid, and which is also a glycol monoalkyl ether-based solvent (provided the boiling point at one atmosphere is within a range from 100 to 235°C) and/or a dihydric alcohol-based solvent (provided the boiling point at one atmosphere is within a range from 100 to 235°C) is preferred.

On the other hand, from the viewpoint of enhancing the affinity with the ethylene-vinyl alcohol copolymer resin (A-1), and obtaining printed items having superior image quality and separability, the water-soluble organic solvent contained in the aqueous inkjet ink preferably has an alkyl group and a hydroxyl group. The number of carbon atoms in the alkyl group may be one or greater, but a solvent having an alkyl group of at least two carbon atoms is preferred, and a solvent having an alkyl group of three or more carbon atoms is particularly desirable. From this viewpoint, for example, the types of glycol monoalkyl ether-based solvents described above have both an alkyl group and a hydroxyl group, and can be used favorably. Further, in those cases where the aqueous inkjet ink contains a dihydric alcohol-based solvent, linear alkanediols that do not have the hydroxyl groups at both terminals of the hydrocarbon chain and branched alkanediols can be used favorably. Specific examples of dihydric alcohols that can be used favorably include 1,2-propanediol 1,2-butanediol, 1,3-butanediol, 1,2-pentanediol, 1,2-hexanediol, 1,2-heptanediol, 2,2-dimethyl-1,3-propanediol, 2-methyl-1,3-propanediol, 2-ethyl-2-methyl-1,3-propanediol, 3-methyl-1,3-butanediol, 3-methyl-1,5-pentanediol, 2-methyl-2-propyl-1,3-propanediol, 2-methylpentan-2,4-diol, 2-ethyl-1,3-hexanediol, and 1,2-octanediol.

In those cases where the aqueous inkjet ink contains a water-soluble organic solvent, the amount of the water-soluble organic solvent, relative to the total mass of the aqueous inkjet ink, is preferably within a range from 5 to 50% by mass, more preferably from 8 to 40% by mass, and particularly preferably from 10 to 30% by mass.

On the other hand, in those cases where the aqueous inkjet ink contains a surfactant, the same compounds as those described above for use as the surfactant (B) may be used. In such cases, from a similar viewpoint to that described above for the cases where the aqueous inkjet ink contains a water-soluble organic solvent, the selection of a surfactant having an alkyl group and a hydroxyl group is preferred. From this viewpoint, acetylene diol-based surfactants, (poly)oxyalkylene alkyl ether-based surfactants and (poly)oxyalkylene alkyl amine-based surfactants that can be used favorably as the surfactant (B), which all have both an alkyl group and a hydroxyl group, and can be used favorably.

In those cases where the aqueous inkjet ink contains a surfactant, the amount of the surfactant, relative to the total mass of the aqueous inkjet ink, is preferably within a range from 0.01 to 5.0% by mass, and more preferably from 0.05 to 3.0% by mass.

<Method for Producing Printed Items>

Next, the method for producing printed items using the aqueous pretreatment liquid and aqueous inkjet ink

described above, and the steps and the like within that method, are described in detail.

When a printed item is produced using the aqueous pretreatment liquid and aqueous inkjet ink described above, a step (1) of applying the aqueous pretreatment liquid to a substrate, and a step (2) of printing the aqueous inkjet ink onto the substrate obtained in step (1) are preferably conducted in that order.

<Aqueous Pretreatment Liquid Application Step (1)>

In step (1), the method used for applying the aqueous pretreatment liquid of the present invention to the substrate may be either a non-contact method for printing the aqueous pretreatment liquid to the substrate such as an inkjet printing method, or a coating method in which the aqueous pretreatment liquid is brought into contact with the substrate. Specific examples of the inkjet printing method are similar to those used for the aqueous inkjet ink, and details are described below. On the other hand, in those cases where a coating method in which the aqueous pretreatment liquid is brought into contact with the substrate is selected as the method of applying the aqueous pretreatment liquid, coating device such as a gravure coater, offset gravure coater, doctor coater, bar coater, blade coater, flexo coater, air doctor coater or roll coater can be used.

Among the various possibilities, in terms of conforming with the characteristics of the aqueous pretreatment liquid of the present invention, enabling application to be conducted stably, uniformly and easily to the various substrates described below, and enabling ready adjustment of the coating amount, for example, by adjusting the coating amount in accordance with the nature of the substrate, thereby making it easier to achieve a better balance between the image quality and abrasion resistance of the printed items and the separability of the layer formed from the aqueous inkjet ink, a gravure coater, offset gravure coater or flexo coater can be used particularly favorably.

From the viewpoint of obtaining printed items having excellent levels for all of the image quality, abrasion resistance, and separability of the layer formed from the aqueous inkjet ink, the thickness of the layer of the aqueous pretreatment liquid immediately following application is preferably within a range from 1 to 10 μm, more preferably from 2 to 8 μm, and particularly preferably from 3 to 7 μm.

<Drying Step (1A) following Aqueous Pretreatment Liquid Application>

In step (2) mentioned above, the state of dryness of the aqueous pretreatment liquid on the substrate when the aqueous inkjet ink is printed may be selected as appropriate.

In one embodiment, the aqueous pretreatment liquid is preferably dried prior to printing of the aqueous inkjet ink, namely, at the point immediately prior to impact of the liquid droplets of the aqueous inkjet ink, the residual amount of volatile components contained in the aqueous pretreatment liquid on the substrate is preferably reduced to not more than 5% by mass (and more preferably not more than 3% by mass, and particularly preferably 2% by mass or less) relative to the total mass of volatile components contained in the aqueous pretreatment liquid prior to application to the substrate. The reason for this preference is that by printing the aqueous inkjet ink after drying of the aqueous pretreatment liquid, printed items of superior abrasion resistance and image quality can be obtained, without suffering from drying faults of the subsequently applied aqueous inkjet inks.

In such cases, a step of drying the aqueous pretreatment liquid on the substrate (hereinafter also referred to as the "drying step (1A)") is preferably provided following step (1) but prior to step (2). There are no particular limitations on the method used for drying the aqueous pretreatment liquid in the drying step (1A), and conventionally known methods such as heated drying methods, hot air drying methods, infrared drying methods, microwave drying methods, drum drying methods and high frequency dielectric heating methods may be used. One of these drying methods may be used alone, or a combination of a plurality of methods may be used, but in order to reduce any damage to the substrate and ensure efficient drying, a hot air drying method and/or an infrared drying method is preferably used.

<Preliminary Drying Step (1B) following Aqueous Pretreatment Liquid Application>

On the other hand, in another embodiment, the aqueous inkjet ink may also be printed onto the layer of the aqueous pretreatment liquid while it is still in a wet state. In this description, the expression that "the aqueous pretreatment liquid is in a wet state" means that immediately prior to impact of the liquid droplets of the aqueous inkjet ink, the residual amount of volatile components contained in the aqueous pretreatment liquid on the substrate is at least 50% by mass (and more preferably at least 75% by mass, and particularly preferably 90% by mass or more) relative to the total mass of volatile components contained in the aqueous pretreatment liquid prior to application to the substrate. By printing the aqueous inkjet ink onto the aqueous pretreatment liquid that is still in a wet state, printed items of excellent image quality and separability can be obtained.

In such cases, either a drying step is not provided, or a step of only partially drying the aqueous pretreatment liquid on the substrate (hereinafter also referred to as the "preliminary drying step (1B)") is preferably provided, following

step (1) but prior to step (2). From the viewpoint of preventing excessive drying of the aqueous pretreatment liquid, the aqueous pretreatment liquid drying method used in this preliminary drying step (1B) is, for example, preferably an ambient temperature air drying method or a visible light drying method or the like. Further, the methods described above for use in the drying step (1A) may also be employed, with appropriate adjustment of the amount of energy imparted to the printed item. Moreover, one drying method may be used alone, or a combination of a plurality of methods may be used.

<Aqueous Inkjet Ink Printing Step (2)>

In step (2), in order to realize the effects of the present invention, the aqueous inkjet ink is preferably printed so as to at least partially overlap the portion to which the aqueous pretreatment liquid was applied, and is more preferably printed so as to overlap only the portion to which the aqueous pretreatment liquid was applied.

In step (2), the same aqueous inkjet ink may be used to fill a plurality of inkjet heads, with the aqueous inkjet ink then printed onto the substrate from each of those inkjet heads. Further, the aqueous inkjet ink used to fill each inkjet head may be jetted from the inkjet head in a heated state. In such cases, the heating temperature of the aqueous inkjet ink in the inkjet head is preferably within a range from 30 to 50°C, and particularly preferably from 30 to 45°C. Moreover, the aqueous inkjet ink may also be printed while, for example, the substrate is heated from the rear surface (the surface on the opposite side from the surface where the liquid droplets of the aqueous inkjet ink impact the substrate). In this case, the temperature of the surface on which the aqueous inkjet ink is printed is preferably heated to a temperature within a range from 30 to 55°C, and particularly preferably a temperature from 35 to 50°C.

Furthermore, the aqueous inkjet ink may incorporate a plurality of aqueous inkjet inks. Specifically, the aqueous inkjet ink may include two or more inks selected from the group consisting of cyan inks, magenta inks, yellow inks, black inks and white inks.

<Inkjet Printing Method>

As described above, the aqueous inkjet ink is printed onto the substrate using an inkjet printing method. Further, an inkjet printing method may also be selected as the method for applying the aqueous pretreatment liquid to the substrate. In such cases, the inkjet printing method used in the printing may employ a single-pass method in which the aqueous inkjet ink or the like is jetted onto the substrate during only one pass, or may employ a multi-pass method in which the aqueous inkjet ink or the like is jetted while a short shuttle head is scanned back and forth multiple times in a direction perpendicular to the transport direction of the substrate. Further, specific examples of the single-pass method include a method in which the inkjet head is scanned only once across the stationary substrate (called a "head scanning single-pass method" in this description), and a method in which the substrate is passed only once beneath the stationary inkjet head while printing is conducted (called a "head fixed single-pass method" in this description). In the present invention, either of these methods may be employed, but from the viewpoint of not requiring adjustment of the jetting timing of the aqueous inkjet ink relative to a scanning inkjet head, meaning discrepancies in the impact location are less likely to occur, and printed items of superior image quality can be obtained, the head fixed single-pass method can be used particularly favorably.

In terms of obtaining images of superior image quality, the design resolution of the inkjet head used in the head fixed single-pass printing is preferably at least 600 dpi (dots per inch), and is more preferably 720 dpi or higher.

<Substrate>

The printed items produced using the aqueous pretreatment liquid of the present invention and the aqueous inkjet ink employ a conventionally known substrate that can be printed in a favorable manner. Among the various possibilities, if consideration is given to the superior abrasion resistance of the printed items, and the ready adsorption of the pretreatment layer to air bubbles mentioned above, paper substrates can be used particularly favorably as the substrate. Examples of paper substrates that may be used include high-quality papers, medium-quality papers, plain papers (PPC paper), craft papers, woody papers, liner papers (cardboard), finely coated papers, coated papers, art papers, matte coated papers, and cast coated papers. Further, in addition to these paper substrates, plastic substrates such as polyvinyl chloride sheets, polyethylene terephthalate (PET) films, polypropylene films, polyethylene films, nylon films, polystyrene films and polyvinyl alcohol films; metal substrates such as aluminum and iron; and glass substrates and the like may also be used to produce the printed items.

The surface of these substrates may be smooth or uneven, and the substrate may be transparent, semi-transparent or opaque. Further, a substrate prepared by bonding together two or more of the above substrates may also be used. Moreover, a releasable adhesive layer may be provided on the substrate on the opposite side from the aqueous pretreatment liquid application surface. Further, an adhesive layer or the like may be provided on the printed surface following printing. In addition, the substrate may be either in roll form or in sheet-like form.

In those cases where a paper substrate or plastic substrate is used, from the viewpoint of enabling the aqueous pretreatment liquid of the present invention to be applied uniformly with no irregularities, thereby stably improving the image quality, abrasion resistance and separability and the like of the printed items, and dramatically improving the substrate adhesion in the printed items, the paper substrate or plastic substrate is preferably subjected to a surface modification treatment such as a corona treatment or a plasma treatment prior to application of the aqueous pretreatment liquid.

<Method for Separating Printed Item>

Next, the method used for separating the aqueous inkjet ink layer from the printed item produced using the aqueous pretreatment liquid and aqueous inkjet ink described above is described below in detail. The pretreatment layer is preferably in a solid state when the layer formed from the aqueous inkjet ink is separated.

In this description, (a portion of) the pretreatment layer may be attached to the "layer formed from the aqueous inkjet ink" that is separated from the substrate. In one embodiment, during the separation of the aqueous inkjet ink layer from a printed item on a paper substrate, in terms of facilitating adsorption of the pretreatment layer to air bubbles, thereby achieving superior separation, it is preferable that the layer formed from the aqueous inkjet ink is bonded to the pretreatment layer. Further, from this viewpoint, it is particularly desirable that the aqueous inkjet ink used at least in this embodiment includes a binder resin described above.

<Method for Separating Aqueous Inkjet Ink Layer from Printed Item on Paper Substrate>

One example of a method that may be used for separating the aqueous inkjet ink layer from a printed item on a paper substrate produced using the aqueous pretreatment liquid of the present invention and an aqueous inkjet ink is a method that includes a wet disintegration step and an aqueous inkjet ink layer removal step.

In the wet disintegration step, the printed item on the paper substrate is dipped in a basic solution, the pulp of the printed item is unraveled and converted to a slurry while the pulp concentration and disintegration temperature and the like are adjusted, the pretreatment layer becomes swollen in the basic solution, and the layer formed from the aqueous inkjet ink separates from the pulp. The basic solution used in this wet disintegration step contains at least a basic material and a liquid medium (and preferably an aqueous medium), and may also contain an added bleaching agent, bleaching assistant, disintegration promoter, deinking agent, and/or antifoaming agent or the like.

For example, an alkali metal hydroxide can be used as the above basic material, and from the viewpoints of the basicity strength (pKb value), solubility in aqueous media, strength of absorption by the pretreatment layer, and ease of availability and the like, sodium hydroxide (caustic soda) and potassium hydroxide (caustic potash) can be used particularly favorably. The amount of this basic material added relative to the mass of the pulp contained in the printed item is preferably within a range from 0.05 to 3.5% by mass, and particularly preferably from 0.1 to 2.5% by mass. By ensuring an amount within this range, the sodium hydroxide or potassium hydroxide can satisfactorily permeate into the pulp and the pretreatment layer to enable swelling of the pulp and the pretreatment layer, and therefore the layer formed from the aqueous inkjet ink can be more easily separated.

Furthermore, a bleaching agent such as hydrogen peroxide or a hypochlorite (salt) may be added to the basic solution in an amount within a range from 0.3 to 4% by mass, and preferably from 0.5 to 3% by mass, relative to the mass of pulp in the printed item. Moreover, a compound such as sodium silicate may also be added as a bleaching assistant and disintegration promoter in an amount within a range from 0.3 to 4% by mass, and preferably from 0.5 to 3% by mass, relative to the mass of pulp in the printed item. In addition, a deinking agent may also be added in an amount within a range from 0.01 to 0.5% by mass, and preferably from 0.02 to 0.3% by mass, relative to the mass of pulp in the printed item.

Examples of compounds that may be used as the deinking agent mentioned above and further described below include fatty acid compounds such as fatty acids (such as oleic acid, stearic acid, coconut fatty acid, palm oil fatty acid, and beef tallow fatty acid), fatty acid salts, fatty acid esters, polyoxyalkylene fatty acids, and polyoxyalkylene fatty acid esters; higher alcohol compounds such as higher alcohols (such as oleyl alcohol, stearyl alcohol, isostearyl alcohol, and behenyl alcohol), higher alcohol sulfates, polyoxyalkylene higher alcohols, polyoxyalkylene higher alcohol sulfates, and polyoxyalkylene higher alcohol sulfate esters; and other surfactants such as alkylbenzene sulfonates, alkyl sulfate esters and alkylphenols. Furthermore, examples of commercially available products of deinking agents that contain the above compounds include DI-767, DI-7020, DI-7250, LUNAC O-V, LUNAC S-50V and LUNAC S-70V (all manufactured by Kao Corporation); the DIA-Z series and DIZ-Y series (both manufactured by Nissin Kagaku Kenkyusho Co., Ltd.); The Neoscore series (manufactured by Toho Chemical Industry Co., Ltd.); and the DYHOPE series (manufactured by DKS Co., Ltd.). The deinking agent may be composed of a single component, or may be a mixture of two or more components.

In the wet disintegration step, a conventionally known device such as a pulper, disk refiner, homogenizer or kneader may be used without any particular restrictions. Further, the temperature of the mixture during the wet disintegration step is preferably within a range from 15 to 50°C, and particularly preferably from 25 to 50°C. Moreover, the pulp concentration in the mixture during the wet disintegration step is preferably within a range from 2 to 35% by mass, more preferably from 4 to 30% by mass, and particularly preferably from 6 to 25% by mass.

The time of the wet disintegration step when executed at a temperature within the preferred range mentioned above is preferably within a range from 10 to 60 minutes, and particularly preferably from 15 to 40 minutes.

In the aqueous inkjet ink layer removal step, (fragments of) the layer formed from the aqueous inkjet ink that has separated during the wet disintegration step described above is removed from the mixture. Examples of the method used include a method in which the fragments of the layer formed from the aqueous inkjet ink are selectively adsorbed to air bubbles (the flotation method), and a method in which filtration using a mesh or the like and subsequent washing are repeated (the washing method), and either of these methods may be employed. In the case of the present invention, as mentioned above, because the pretreatment layer containing the ethylene-vinyl alcohol copolymer resin (A-1) adsorbs readily to air bubbles (and the deinking agent that exists at the air bubble interface), from the viewpoint of obtaining a deinked pulp and recycled paper of superior purity, selection of the flotation method is preferred.

When the flotation method is employed, a conventionally known device such as a flotator, exractor or multiwasher may be used without any particular restrictions. Further, the temperature of the mixture during the flotation is preferably within a range from 15 to 50°C, and particularly preferably from 25 to 50°C. Moreover, the pulp concentration in the mixture during the flotation is preferably within a range from 0.5 to 2% by mass, and particularly preferably from 0.6 to 1.5% by mass.

Following the wet disintegration step and prior to the aqueous inkjet ink layer removal step, a dilution step and/or dewatering step may be conducted to adjust the solid fraction concentration of the mixture. Further, a filtration step may also be conducted to separate and remove large objects from the mixture. Moreover, prior to the aqueous inkjet ink layer removal step, the amount of certain components (such as the basic material, bleaching agent, bleaching assistant, disintegration promoter, deinking agent and antifoaming agent described above) in the mixture may be increased if required. In addition, other components such as foaming agents may also be added.

<Method for Separating Aqueous Inkjet Ink Layer from Printed Item on Plastic Substrate>

On the other hand, one example of a method that may be used for separating the aqueous inkjet ink layer from a printed item on a plastic substrate produced using the aqueous pretreatment liquid of the present invention and an aqueous inkjet ink is a method that includes a basic solution dipping step. In this dipping step, the printed item is dipped in a basic solution, and the layer formed from the aqueous inkjet ink is separated from the plastic substrate. The basic solution contains at least a basic material and a liquid medium (and preferably an aqueous medium). In order to improve the separation efficiency, a printed item that has been crushed or ground in advance may also be used.

For example, an alkali metal hydroxide can be used as the above basic material, and from the viewpoints of the basicity strength (pKb value), solubility in aqueous media, strength of absorption by the ethylene-vinyl alcohol copolymer resin (A-1) in the pretreatment layer, and ease of availability and the like, sodium hydroxide and potassium hydroxide can be used particularly favorably. The amount of this basic material relative to the total mass of the basic solution is preferably within a range from 0.2 to 15% by mass, more preferably from 0.5 to 12% by mass, and particularly preferably from 1 to 10% by mass. By ensuring a concentration within this range, the basic solution can satisfactorily maintain sufficient basicity for the separation process. Further, even if the basic solution does not penetrate into the interior of the plastic substrate, permeation at the surface and edges of the printed item is sufficient to ensure satisfactory separability.

The temperature of the mixture during the basic solution dipping step is preferably within a range from 20 to 120°C, more preferably from 25 to 110°C, even more preferably from 28 to 90°C, and particularly preferably from 30 to 80°C. The time of the dipping step when executed at a temperature within the above preferred range is preferably within a range from 1 minute to 24 hours, more preferably from 1 minute to 12 hours, and particularly preferably from 1 minute to 6 hours.

During the dipping process, the separation is preferably conducted under stirring. For example, in those cases where the mixtures are stirred with a rotating blade, the blade is preferably rotated at a revolution rate of 80 to 250 rpm, and more preferably a rate of 80 to 200 rpm.

Furthermore, the amount used of the basic solution is preferably within a range from 100 times to 1,000,000 times the mass of the printed items. In order to reduce the amount used of the basic solution, a separation device that allows recirculation of the basic solution may be used.

EXAMPLES

The present invention is described below in further detail using a series of examples and comparative examples, but the present invention is in no way limited by these examples. In the following description, unless specifically stated

otherwise, "parts" and "%" refer to mass-based values.

<(1-1) Production Example for Ethylene-Vinyl Alcohol Copolymer Resin 1>

A pressure-resistant reaction container fitted with a gas inlet tube, a thermometer, a condenser, a stirrer and a cooling device was charged with 100 parts of vinyl acetate and 30 parts of methanol, and following thorough flushing of the interior of the container with nitrogen, ethylene was injected into the container in sufficient amount to achieve a pressure of 5.0 kg/cm$^2$. Subsequently, the internal temperature of the reaction container was raised to 60°C, and a methanol solution of 2,2'-azobisisobutyronitrile was added to initiate a polymerization reaction. The reaction was continued for three hours, and the internal temperature inside the container was then cooled to 30°C, and the unreacted ethylene and vinyl acetate were removed to obtain a methanol solution of an ethylene-vinyl acetate copolymer resin 1.

Subsequently, with the methanol solution undergoing constant stirring, a sufficient volume of a 10% by mass methanol solution of sodium hydroxide was added to initiate a saponification reaction. The reaction was continued for one hour, and the product was then filtered, washed, dried and crushed to obtain an ethylene-vinyl alcohol copolymer resin 1. The properties of the ethylene-vinyl alcohol copolymer resin 1 measured and calculated in accordance with the methods described above included a polymerization degree of 1,000, a saponification degree of 99 mol%, and a degree of ethylene modification of 6.2 mol%.

<(1-2) Production Examples for Ethylene-Vinyl Alcohol Copolymer Resins 2 to 6>

With the exceptions of adjusting the ethylene pressure during the injection into the pressure-resistant reaction container, the polymerization reaction temperature and the polymerization reaction time, ethylene-vinyl alcohol copolymer resins 2 to 6 having the polymerization degree, saponification degree and degree of ethylene modification values shown below in Table 1 were obtained using the same method as that described above for the ethylene-vinyl alcohol copolymer resin 1.

In Table 1 below, the polymerization degree, saponification degree and degree of ethylene modification are also shown for the ethylene-vinyl alcohol copolymer resin 1.

[Table 1]

| Resin name | Polymerization degree | Saponification degree (mol%) | Degree of ethylene modification (mol%) |
|---|---|---|---|
| Ethylene-vinyl alcohol copolymer resin 1 | 1,000 | 99 | 6.2 |
| Ethylene-vinyl alcohol copolymer resin 2 | 2,000 | 98 | 6.2 |
| Ethylene-vinyl alcohol copolymer resin 3 | 650 | 99 | 6.2 |
| Ethylene-vinyl alcohol copolymer resin 4 | 1,000 | 99 | 3.2 |
| Ethylene-vinyl alcohol copolymer resin 5 | 1,000 | 99 | 1.6 |
| Ethylene-vinyl alcohol copolymer resin 6 | 1,000 | 98 | 9.4 |

<(1-3) Production Examples for Ethylene-Vinyl Alcohol Copolymer Resins 7 to 9>

Following preparation of the methanol solution of the ethylene-vinyl acetate copolymer resin 1 using the same method as that described above for the ethylene-vinyl alcohol copolymer resin 1, the methanol was removed by distillation under reduced pressure to isolate the copolymer resin. Subsequently, 100 parts of the ethylene-vinyl acetate copolymer resin 1 was redissolved in methanol, and with the solution undergoing constant stirring, 800 parts of a 10% by mass methanol solution of sodium hydroxide was then added to initiate a saponification reaction. The reaction was continued for one hour, and the product was then filtered, washed, dried and crushed to obtain an ethylene-vinyl alcohol copolymer resin 7. The properties of the ethylene-vinyl alcohol copolymer resin 7 measured and calculated in accordance with the methods described above included a polymerization degree of 1,000, a saponification degree of 92 mol%, and a degree of ethylene modification of 6.2 mol%.

With the exception of altering the amountof the 10% by mass methanol solution of sodium hydroxide added to 700 parts and 600 parts respectively, ethylene-vinyl alcohol copolymer resins 8 and 9 were obtained using the same method as that described for the ethylene-vinyl alcohol copolymer resin 7. The ethylene-vinyl alcohol copolymer resin 8 had a polymerization degree of 1,000, a saponification degree of 80 mol% and a degree of ethylene modification of 6.2 mol%, and the ethylene-vinyl alcohol copolymer resin 9 had a polymerization degree of 1,000, a saponification

degree of 72 mol%, and a degree of ethylene modification of 6.2 mol%.

<(1-4) Ethylene-Vinyl Alcohol Copolymer Resins 10 to 12>

In the following evaluations, commercial products of ethylene-vinyl alcohol copolymer resins (all manufactured by Kuraray Co., Ltd.) were used as ethylene-vinyl alcohol copolymer resins 10 to 12. The products used as the ethylene-vinyl alcohol copolymer resins 10 to 12, and the polymerization degree, saponification degree and degree of ethylene modification of each of those products are as shown below in Table 2.

[Table 2]

| Resin name | Product used | Polymerization degree | Saponification degree (mol%) | Degree of ethylene modification (mol%) |
|---|---|---|---|---|
| Ethylene-vinyl alcohol copolymer resin 10 | EXCEVAL RS-2117 | 1,700 | 98 | 3.0 |
| Ethylene-vinyl alcohol copolymer resin 11 | EXCEVAL HR-3010 | 1,000 | 99 | 4.5 |
| Ethylene-vinyl alcohol copolymer resin 12 | EXCEVAL RS-4104 | 400 | 98 | 5.9 |

<(2-1) Production Examples for Ethylene-Vinyl Alcohol Copolymer Resin Aqueous Solutions 1 to 12>

A mixing container fitted with a thermometer and a stirrer was charged with 15 parts of the ethylene-vinyl alcohol copolymer resin 1 and 85 parts of ion-exchanged water. Followed by stirring and mixing of the contents in the container at room temperature for one hour, the contents were heated to 90°C and stirring was continued for an additional one hour. Subsequently, the temperature of the contents was cooled to room temperature, thus obtaining an ethylene-vinyl alcohol copolymer resin aqueous solution 1 (solid fraction concentration: 15% by mass).

Further, with the exception of using the ethylene-vinyl alcohol copolymer resins 2 to 12 instead of the ethylene-vinyl alcohol copolymer resin 1, the same method as that described above for the ethylene-vinyl alcohol copolymer resin aqueous solution 1 was used to obtain ethylene-vinyl alcohol copolymer resin aqueous solutions 2 to 12 (each having a solid fraction concentration of 15% by mass).

<(2-2) Production Examples for Ethylene-Vinyl Alcohol Copolymer Resin Emulsions 1 and 2>

With the exception of using a commercially available ethylene-vinyl alcohol copolymer resin EVAL E105B manufactured by Kuraray Co., Ltd. (polymerization degree: 1,500, saponification degree: 99 mol%, degree of ethylene modification: 44%) as EVOH (c2), the method disclosed in Example 4 of JP 2003-2071 A was used to obtain an emulsion (solid fraction concentration: 25% by mass) of this ethylene-vinyl alcohol copolymer resin commercial product (hereinafter referred to as "ethylene-vinyl alcohol copolymer resin emulsion 1").

Furthermore, with the exception of using a commercially available ethylene-vinyl alcohol copolymer resin EVAL F104B manufactured by Kuraray Co., Ltd. (polymerization degree: 500, saponification degree: 99 mol%, degree of ethylene modification: 32%) as EVOH (c2), the same method as that described above for the ethylene-vinyl alcohol copolymer resin emulsion 1 was used to obtain an ethylene-vinyl alcohol copolymer resin emulsion 2 (solid fraction concentration: 25% by mass).

<(3) Preparation Examples for Aqueous Pretreatment Liquids 1 to 94>

The materials shown for each example in Table 3 below were added sequentially to a mixing container fitted with a thermometer and a stirrer. Each raw material was added while the contents of the mixing container were undergoing stirring, and in each example, the raw materials were added to the mixing container in order from the material in the top row of Table 3 downward. Following completion of the addition of all of the materials, the contents of the mixing container were stirred and mixed at room temperature for one hour, the temperature of the contents was then raised to 60°C, and stirring was continued for an additional one hour at 60°C. The contents were then cooled to room temperature and filtered through a membrane filter with a pore size of 1 μm to obtain a series of aqueous pretreatment liquids 1 to 94.

[Table 3]

| Aqueous pretreatment liquid No. | | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|---|
| | | Ethylene-vinyl alcohol copolymer aqueous solution 1 | Solid fraction: 15% | 13.3 | | | | | | | | | | | | | |
| | | Ethylene-vinyl alcohol copolymer aqueous solution 2 | Solid fraction: 15% | | 13.3 | | | | | | | | | | | | |
| | | Ethylene-vinyl alcohol copolymer aqueous solution 3 | Solid fraction: 15% | | | 13.3 | | | | | | | | | | | |
| | | Ethylene-vinyl alcohol copolymer aqueous solution 4 | Solid fraction: 15% | | | | 13.3 | | | | | | | | 1.4 | 2 | 4.7 |
| | | Ethylene-vinyl alcohol copolymer aqueous solution 5 | Solid fraction: 15% | | | | | 13.3 | | | | | | | | | |

(continued)

| Aqueous pretreatment liquid No. | | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|---|
| Resin (A) | Ethylene-vinyl alcohol copolymer (A-1) | Ethylene-vinyl alcohol copolymer aqueous solution 6 | Solid fraction: 15% | | | | | | 13.3 | | | | | | | | |
| | | Ethylene-vinyl alcohol copolymer aqueous solution 7 | Solid fraction: 15% | | | | | | | 13.3 | | | | | | | |
| | | Ethylene-vinyl alcohol copolymer aqueous solution 8 | Solid fraction: 15% | | | | | | | | 13.3 | | | | | | |
| | | Ethylene-vinyl alcohol copolymer aqueous solution 10 | Solid fraction: 15% | | | | | | | | | 13.3 | | | | | |
| | | Ethylene-vinyl alcohol copolymer aqueous solution 11 | Solid fraction: 15% | | | | | | | | | | 13.3 | | | | |

(continued)

| Aqueous pretreatment liquid No. | | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|---|
| | | Ethylene-vinyl alcohol copolymer aqueous solution 12 | Solid fraction: 15% | | | | | | | | | | | 13.3 | | | |
| Surfactant (B) | High HLB value surfactant (B-1) | Surfynol 465 | HLB value: 13.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | | POAA compound 1 | HLB value: 12.5 | 1.0 | 1.0 | 1.0 | 1.0 | 1.0 | 1.0 | 1.0 | 1.0 | 1.0 | 1.0 | 1.0 | 1.0 | 1.0 | 1.0 |
| Coagulant | Polyvalent metal salt | Calcium nitrate | Solubility: 121 g | 20.0 | 20.0 | 20.0 | 20.0 | 20.0 | 20.0 | 20.0 | 20.0 | 20.0 | 20.0 | 20.0 | 20.0 | 20.0 | 20.0 |
| Water-soluble organic solvent (C) | Water-soluble organic solvent (C-1) | 2-propanol | Boiling point: 83°C Surface tension: 21 mN/m | 2.5 | 2.5 | 2.5 | 2.5 | 2.5 | 2.5 | 2.5 | 2.5 | 2.5 | 2.5 | 2.5 | 2.5 | 2.5 | 2.5 |
| Water-soluble organic solvent (C) (incl. pH adjuster) | Water-soluble organic solvent (C-1) | Triethanolamine | | 1.5 | 1.5 | 1.5 | 1.5 | 1.5 | 1.5 | 1.5 | 1.5 | 1.5 | 1.5 | 1.5 | 1.5 | 1.5 | 1.5 |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | 0.5 | 0.5 | 0.5 |
| Other components | | BITaq | | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Ion-exchanged water | | 60.0 | 60.0 | 60.0 | 60.0 | 60.0 | 60.0 | 60.0 | 60.0 | 60.0 | 60.0 | 60.0 | 71.9 | 71.3 | 68.6 |

(continued)

| Aqueous pretreatment liquid No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Specifications | Amount of ethylene-vinyl alcohol copolymer (A-1) | 2.0 | 2.0 | 2.0 | 2.0 | 2.0 | 2.0 | 2.0 | 2.0 | 2.0 | 2.0 | 2.0 | 0.2 | 0.3 | 0.7 |
| | Amount of ethylene-vinyl alcohol copolymer (A-1) when amount of water-soluble organic solvent (C-1) deemed 1 | 0.50 | 0.50 | 0.50 | 0.50 | 0.50 | 0.50 | 0.50 | 0.50 | 0.50 | 0.50 | 0.50 | 0.05 | 0.08 | 0.18 |

[Table 3 continued]

| Aqueous pretreatment liquid No. | | | | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|---|---|
| | Ethylene-vinyl alcohol copolymer (A-1) | Ethylene-vinyl alcohol copolymer aqueous solution 4 | Solid fraction: 15% | 40 | 66.6 | 68 | 10 | 10 | | | | | | | | | | |
| | | Ethylene-vinyl alcohol copolymer emulsion 1 | Solid fraction: 25% | | | | | | 10 | | | | | | | | | |
| | | Ethylene-vinyl alcohol copolymer emulsion 2 | Solid fraction: 25% | | | | | | | 10 | 4 | 40 | 60 | 10 | 10 | | | |

(continued)

| Aqueous pretreatment liquid No. | | | | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|---|---|
| Resin (A) | Other resin (A-2) | Ethylene-vinyl alcohol copolymer aqueous solution 9 | Solid fraction: 15% | | | | | | | | | | | | | 13.3 | | |
| | | POVAL 11-98 aqueous solution | Solid fraction: 15% | | | | | | | | | | | | | | 13.3 | |
| | | POVAL 9-88 aqueous solution | Solid fraction: 15% | | | | | | | | | | | | | | | 13.3 |
| | | Neocryl XK-190 | Solid fraction: 45% | | | | | | | | | | | 5.6 | | | | |
| | | WEM-3000 | Solid fraction: 32.5% | | | | | | | | | | | | 7.7 | | | |
| | | HYTEC E6400 | Solid fraction: 35% | | | | | 2.9 | | | | | | | | | | |
| Surfactant (B) | High HLB value surfactant (B-1) | Surfynol 465 | HLB value: 13.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | | POAA compound 1 | HLB value: 12.5 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Coagulant | Polyvalent metal salt | Calcium nitrate | Solubility: 121 g | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |

(continued)

| Aqueous pretreatment liquid No. | | | | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|---|---|
| Water-soluble organic solvent (C) | Water-soluble organic solvent (C-1) | 2-propanol | Boiling point: 83°C Surface tension: 21 mN/m | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Water-soluble organic solvent (C) (incl. pH adjuster) | Water-soluble organic solvent (C-1) | Triethanolamine | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Other components | | BITaq | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Ion-exchanged water | | 33.3 | 6.7 | 5.3 | 56.6 | 60.4 | 63.3 | 63.3 | 69.3 | 33.3 | 13.3 | 57.7 | 55.6 | 60.0 | 60.0 | 60.0 |
| Specifications | | Amount of ethylene-vinyl alcohol copolymer (A-1) | | 6.0 | 10.0 | 10.2 | 1.5 | 1.5 | 2.5 | 2.5 | 1.0 | 10.0 | 15.0 | 2.5 | 2.5 | 0 | 0 | 0 |
| | | Amount of ethylene-vinyl alcohol copolymer (A-1) when amount of water-soluble organic solvent (C-1) deemed 1 | | 1.50 | 2.50 | 2.55 | 0.38 | 0.38 | 0.63 | 0.63 | 0.25 | 2.50 | 3.75 | 0.63 | 0.63 | 0 | 0 | 0 |

[Table 3 continued]

| Aqueous pretreatment liquid No. | | | | 30 | 31 | 32 | 33 | 34 | 35 | 36 | 37 | 38 | 39 | 40 | 41 | 42 | 43 | 44 |
|---|---|---|---|---|---|---|---|---|---|---|---|---|---|---|---|---|---|---|
| Resin (A) | Ethylene-vinyl alcohol copolymer (A-1) | Ethylene-vinyl alcohol copolymer aqueous solution 10 | Solid fraction: 15% | 13.3 | 13.3 | 13.3 | 13.3 | 13.3 | 13.3 | 13.3 | 13.3 | 13.3 | 13.3 | 13.3 | 13.3 | 13.3 | 13.3 | 13.3 |
| Surfactant (B) | High HLB value surfactant (B-1) | Surfynol 465 | HLB value: 13.2 | 1.2 | | | | | | | | | | | | | | |
| | | ACETYLENOL E200 | HLB value: 15.9 | | 1.2 | | | | | | | | | | | | | |
| | | POAE compound 1 | HLB value: 9.7 | | | 1.2 | | | | | | | | | | | | |
| | | POAE compound 2 | HLB value: 13.6 | | | | 1.2 | | | | | | | | | | | |
| | | POAE compound 3 | HLB value: 16.5 | | | | | 1.2 | | | | | | | | | | |
| | | POAE compound 4 | HLB value: 18.4 | | | | | | 1.2 | | | | | | | | | |
| | | POAE compound 5 | HLB value: 15.7 | | | | | | | 1.2 | | | | | | | | |
| | | POAE compound 6 | HLB value: 9.9 | | | | | | | | 1.2 | | | | | | | |
| | | POAE compound 7 | HLB value: 15.3 | | | | | | | | | 1.2 | | | | | | |
| | | POAE compound 8 | HLB value: 14.6 | | | | | | | | | | 1.2 | | | | | |
| | | POAA compound 1 | HLB value: 12.5 | | | | | | | | | | | 1.2 | | | | |
| | | POAA compound 2 | HLB value: 17.5 | | | | | | | | | | | | 1.2 | | | |

(continued)

| Aqueous pretreatment liquid No. | | | | 30 | 31 | 32 | 33 | 34 | 35 | 36 | 37 | 38 | 39 | 40 | 41 | 42 | 43 | 44 |
|---|---|---|---|---|---|---|---|---|---|---|---|---|---|---|---|---|---|---|
| | | POAA compound 3 | HLB value: 10.7 | | | | | | | | | | | | | 1.2 | | |
| | | POAA compound 4 | HLB value: 16.6 | | | | | | | | | | | | | | 1.2 | |
| | | BYKK-333 | HLB value: 10.1 | | | | | | | | | | | | | | | 1.2 |
| Coagulant | Polyvalent metal salt | Calcium nitrate | Solubility: 121 g | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| Water-soluble organic solvent (C) | Water-soluble organic solvent (C-1) | 2-propanol | Boiling point: 83°C Surface tension: 21 mN/m | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Water-soluble organic solvent (C) (incl. pH adjuster) | Water-soluble organic solvent (C-1) | Triethanolamine | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Other components | | BITaq | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | | Ion-exchanged water | | 60.0 | 60.0 | 60.0 | 60.0 | 60.0 | 60.0 | 60.0 | 60.0 | 60.0 | 60.0 | 60.0 | 60.0 | 60.0 | 60.0 | 60.0 |
| Specifications | | Amount of ethylene-vinyl alcohol copolymer (A-1) | | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | | Amount of ethylene-vinyl alcohol copolymer (A-1) when amount of water-soluble organic solvent (C-1) deemed 1 | | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 |

[Table 3 continued]

| Aqueous pretreatment liquid No. | | | | 45 | 46 | 47 | 48 | 49 | 50 | 51 | 52 | 53 | 54 | 55 | 56 | 57 |
|---|---|---|---|---|---|---|---|---|---|---|---|---|---|---|---|---|
| Resin (A) | Ethylene-vinyl alcohol copolymer (A-1) | Ethylene-vinyl alcohol copolymer aqueous solution 10 | Solid fraction: 15% | 13.3 | 13.3 | 13.3 | 13.3 | 13.3 | 13.3 | 13.3 | 13.3 | 13.3 | 13.3 | 13.3 | 13.3 | 13.3 |
| Surfactant (B) | High HLB value surfactant (B-1) | Surfynol 465 | HLB value: 13.2 | 0.2 | 0.5 | 5 | 8 | 0.2 | 0.2 | 0.2 | 0.3 | | | | | |
| | | POAE compound 2 | HLB value: 13.6 | | | | | 0.2 | | | | | | | | |
| | | POAE compound 4 | HLB value: 18.4 | | | | | | 0.2 | | | | | | | |
| | | POAE compound 5 | HLB value: 15.7 | | | | | | | | 0.6 | | | | | |
| | | POAA compound 3 | HLB value: 10.7 | | | | | | | 0.2 | | | | | | |
| | Other surfactant (B-2) | Surfynol 440 | HLB value: 8.1 | | | | | | | | | 1.2 | | | | |
| | | POAE compound 9 | HLB value: 8.3 | | | | | | | | | | 1.2 | | | |
| | | POAE compound 10 | HLB value: 9.0 | | | | | | | | | | | 1.2 | | |
| | | POAA compound 5 | HLB value: 7.9 | | | | | | | | | | | | 1.2 | |
| | | Fluorine compound 1 | HLB value: 6.4 | | | | | | | | 0.1 | | | | | 1.2 |
| Coagulant | Polyvalent metal salt | Calcium nitrate | Solubility: 121 g | 20.0 | 20.0 | 20.0 | 20.0 | 20.0 | 20.0 | 20.0 | 20.0 | 20.0 | 20.0 | 20.0 | 20.0 | 20.0 |

(continued)

| Aqueous pretreatment liquid No. | | | | 45 | 46 | 47 | 48 | 49 | 50 | 51 | 52 | 53 | 54 | 55 | 56 | 57 |
|---|---|---|---|---|---|---|---|---|---|---|---|---|---|---|---|---|
| Water-soluble organic solvent (C) | Water-soluble organic solvent (C-1) | 2-propanol | Boiling point: 83°C Surface tension: 21 mN/m | 2.5 | 2.5 | 2.5 | 2.5 | 2.5 | 2.5 | 2.5 | 2.5 | 2.5 | 2.5 | 2.5 | 2.5 | 2.5 |
| Water-soluble organic solvent (C) (incl. pH adjuster) | Water-soluble organic solvent (C-1) | Triethanolamine | | 1.5 | 1.5 | 1.5 | 1.5 | 1.5 | 1.5 | 1.5 | 1.5 | 1.5 | 1.5 | 1.5 | 1.5 | 1.5 |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | 0.5 | 0.5 |
| Other components | | BITaq | | 1.0 | 1.0 | 1.0 | 1.0 | 1.0 | 1.0 | 1.0 | 1.0 | 1.0 | 1.0 | 1.0 | 1.0 | 1.0 |
| | | Ion-exchanged water | | 61.0 | 60.7 | 56.2 | 53.2 | 60.8 | 60.8 | 60.8 | 60.2 | 60.0 | 60.0 | 60.0 | 60.0 | 60.0 |
| Specifications | | Amount of ethylene-vinyl alcohol copolymer (A-1) | | 2.0 | 2.0 | 2.0 | 2.0 | 2.0 | 2.0 | 2.0 | 2.0 | 2.0 | 2.0 | 2.0 | 2.0 | 2.0 |
| | | Amount of ethylene-vinyl alcohol copolymer (A-1) when amount of water-soluble organic solvent (C-1) deemed 1 | | 0.50 | 0.50 | 0.50 | 0.50 | 0.50 | 0.50 | 0.50 | 0.50 | 0.50 | 0.50 | 0.50 | 0.50 | 0.50 |

[Table 3 continued]

| Aqueous pretreatment liquid No. | | | | 58 | 59 | 60 | 61 | 62 | 63 | 64 | 65 | 66 | 67 | 68 | 69 | 70 |
|---|---|---|---|---|---|---|---|---|---|---|---|---|---|---|---|---|
| Resin (A) | Ethylene-vinyl alcohol copolymer (A-1) | Ethylene-vinyl alcohol copolymer aqueous solution 10 | Solidfraction: 15% | 13.3 | 13.3 | 13.3 | 13.3 | 13.3 | 13.3 | 13.3 | 13.3 | 13.3 | 13.3 | 13.3 | 13.3 | 13.3 |
| Surfactant (B) | High HLB value surfactant (B-1) | Surfynol 465 | HLB value: 13.2 | 0.2 | 0.2 | 0.2 | 0.2 | 0.2 | 0.2 | 0.2 | 0.2 | 0.2 | 0.2 | 0.2 | 0.2 | 0.2 |
| | | POAA compound 1 | HLB value: 12.5 | 1.0 | 1.0 | 1.0 | 1.0 | 1.0 | 1.0 | 1.0 | 1.0 | 1.0 | 1.0 | 1.0 | 1.0 | 1.0 |
| Coagulant | Polyvalent metal salt | Calcium nitrate | Solubility: 121 g | | | | | | | | | | | | | |
| | | Magnesium nitrate | Solubility: 70 g | 20.0 | | | | | | | | | | | | |
| | | Calcium chloride | Solubility: 75 g | | 20.0 | | | | | | | | | | | |
| | | Aluminum nitrate | Solubility: 74 g | | | 20.0 | | | | | | | | | | |
| | | Magnesium chloride | Solubility: 55 g | | | | 20.0 | | | | | | | | | |
| | | Calcium propionate | Solubility: 38 g | | | | | 20.0 | | | | | | | | |
| | | Calcium pantothenate | Solubility: 35 g | | | | | | 20.0 | | | | | | | |
| | | Calcium formate | Solubility: 17 g | | | | | | | 15.0 | | | | | | |

(continued)

| Aqueous pretreatment liquid No. | | | | 58 | 59 | 60 | 61 | 62 | 63 | 64 | 65 | 66 | 67 | 68 | 69 | 70 |
|---|---|---|---|---|---|---|---|---|---|---|---|---|---|---|---|---|
| | Cationic resin | PAS-H-1L | Solidfraction: 28% Base value: 350 | | | | | | | | 44.5 | | | | | |
| | Cationic resin | PAS-M-1 | Solidfraction: 50% Base value: 385 | | | | | | | | | 25 | | | | |
| | Cationic resin | PAA-HCl-3L | Solidfraction: 50% Base value: 605 | | | | | | | | | | 25 | | | |
| | Cationic resin | Catiomaster PD-30 | Solidfraction: 52% Base value: 410 | | | | | | | | | | | 24 | | |
| | Metal complex | ORGATIX TC-300 | Solidfraction: 41% | | | | | | | | | | | | 6.1 | |
| Water-soluble organic solvent (C) | Water-soluble organic solvent (C-1) | 2-propanol | Boiling point: 83°C Surface tension: 21 mN/m | 2.5 | 2.5 | 2.5 | 2.5 | 2.5 | 2.5 | 2.5 | 2.5 | 2.5 | 2.5 | 2.5 | 2.5 | 2.5 |
| Water-soluble organic solvent (C) (incl. pH adjuster) | Water-soluble organic solvent (C-1) | Triethanolamine | | 1.5 | 1.5 | 1.5 | 1.5 | 1.5 | 1.5 | 1.5 | 1.5 | 1.5 | 1.5 | 1.5 | 1.5 | 1.5 |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | 0.5 | 0.5 |

(continued)

| Aqueous pretreatment liquid No. | | 58 | 59 | 60 | 61 | 62 | 63 | 64 | 65 | 66 | 67 | 68 | 69 | 70 |
|---|---|---|---|---|---|---|---|---|---|---|---|---|---|---|
| Other components | BITaq | 1.0 | 1.0 | 1.0 | 1.0 | 1.0 | 1.0 | 1.0 | 1.0 | 1.0 | 1.0 | 1.0 | 1.0 | 1.0 |
| | Ion-exchanged water | 60.0 | 60.0 | 60.0 | 60.0 | 60.0 | 60.0 | 65.0 | 35.5 | 55.0 | 55.0 | 56.0 | 73.9 | 80.0 |
| Specifications | Amount of ethylene-vinyl alcohol copolymer (A-1) | 2.0 | 2.0 | 2.0 | 2.0 | 2.0 | 2.0 | 2.0 | 2.0 | 2.0 | 2.0 | 2.0 | 2.0 | 2.0 |
| | Amount of ethylene-vinyl alcohol copolymer (A-1) when amount of water-soluble organic solvent (C-1) deemed 1 | 0.50 | 0.50 | 0.50 | 0.50 | 0.50 | 0.50 | 0.50 | 0.50 | 0.50 | 0.50 | 0.50 | 0.50 | 0.50 |

[Table 3 continued]

| Aqueous pretreatment liquid No. | | | | 71 | 72 | 73 | 74 | 75 | 76 | 77 | 78 | 79 | 80 | 81 | 82 |
|---|---|---|---|---|---|---|---|---|---|---|---|---|---|---|---|
| Resin (A) | Ethylene-vinyl alcohol copolymer (A-1) | Ethylene-vinyl alcohol copolymer aqueous solution 10 | Solid fraction: 15% | 13.3 | 13.3 | 13.3 | 13.3 | 13.3 | 13.3 | 13.3 | 13.3 | 13.3 | 13.3 | 13.3 | 13.3 |
| Surfactant (B) | High HLB value surfactant (B-1) | Surfynol 465 | HLB value: 13.2 | 0.2 | 0.2 | 0.2 | 0.2 | 0.2 | 0.2 | 0.2 | 0.2 | 0.2 | 0.2 | 0.2 | 0.2 |
| | | POAA compound 1 | HLB value: 12.5 | 1.0 | 1.0 | 1.0 | 1.0 | 1.0 | 1.0 | 1.0 | 1.0 | 1.0 | 1.0 | 1.0 | 1.0 |
| Coagulant | Polyvalent metal salt | Calcium nitrate | Solubility: 121 g | 20.0 | 20.0 | 20.0 | 20.0 | 20.0 | 20.0 | 20.0 | 20.0 | 20.0 | 20.0 | 20.0 | 20.0 |
| | | Ethanol | Boiling point: 78°C Surface tension: 23 mN/m | 2.5 | | | | | | | | | | | |
| | | Propylene glycol monomethyl ether | Boiling point: 121°C Surface tension: 26 mN/m | | 2.5 | | | | | | | | | | |
| | | Propylene glycol monoethyl ether | Boiling point: 133°C Surface tension: 26 mN/m | | | 2.5 | | | | | | | | | |
| | | 3-methoxy-1-butanol | Boiling point: 158°C Surface tension: 29 mN/m | | | | 2.5 | | | | | | | 2.3 | 1.8 |
| | | 3-methyl-3-methoxy-1-butanol | Boiling point: 174°C Surface tension: 30 mN/m | | | | | 2.5 | | | | | | | |

(continued)

| Aqueous pretreatment liquid No. | | | | 71 | 72 | 73 | 74 | 75 | 76 | 77 | 78 | 79 | 80 | 81 | 82 |
|---|---|---|---|---|---|---|---|---|---|---|---|---|---|---|---|
| Water-soluble organic solvent | Water-soluble organic solvent (C-1) | 2,3-butanediol | Boiling point: 183°C Surface tension: 35 mN/m | | | | | | 2.5 | | | | | | |
| | | Dipropylene glycol monomethyl ether | Boiling point: 188°C Surface tension: 28 mN/m | | | | | | | 2.5 | | | | | |
| | | 1,2-propanediol | Boiling point: 188°C Surface tension: 36 mN/m | | | | | | | | 2.5 | | | | |
| | | 1,2-butanediol | Boiling point: 193°C Surface tension: 32 mN/m | | | | | | | | | 2.5 | | | |
| | | 1,3-propanediol | Boiling point: 214°C Surface tension: 47 mN/m | | | | | | | | | | 2.5 | | |
| | Other water-soluble organic solvent (C-2) | Diethylene glycol diethyl ether | Boiling point: 189°C Surface tension: 27 mN/m | | | | | | | | | | | 0.2 | 0.7 |

(continued)

| Aqueous pretreatment liquid No. | | | | 71 | 72 | 73 | 74 | 75 | 76 | 77 | 78 | 79 | 80 | 81 | 82 |
|---|---|---|---|---|---|---|---|---|---|---|---|---|---|---|---|
| Water-soluble organic solvent (C) (incl. pH adjuster) | Water-soluble organic solvent (C-1) | Triethanolamine | Boiling point: 335°C Surface tension: 49 mN/m | 1.5 | 1.5 | 1.5 | 1.5 | 1.5 | 1.5 | 1.5 | 1.5 | 1.5 | 1.5 | | |
| | Other water-soluble organic solvent (C-2) | Triethylamine | Boiling point: 90°C Surface tension: 20 mN/m | | | | | | | | | | | 0.5 | 0.5 |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | 0.5 |
| Other components | | BITaq | | 1.0 | 1.0 | 1.0 | 1.0 | 1.0 | 1.0 | 1.0 | 1.0 | 1.0 | 1.0 | 1.0 | 1.0 |
| | | Ion-exchanged water | | 60.0 | 60.0 | 60.0 | 60.0 | 60.0 | 60.0 | 60.0 | 60.0 | 60.0 | 60.0 | 61.0 | 61.0 |
| Specifications | | Amount of ethylene-vinyl alcohol copolymer (A-1) | | 2.0 | 2.0 | 2.0 | 2.0 | 2.0 | 2.0 | 2.0 | 2.0 | 2.0 | 2.0 | 2.0 | 2.0 |
| | | Amount of ethylene-vinyl alcohol copolymer (A-1) when amount of water-soluble organic solvent (C-1) deemed 1 | | 0.50 | 0.50 | 0.50 | 0.50 | 0.50 | 0.50 | 0.50 | 0.50 | 0.50 | 0.50 | 0.87 | 1.11 |

[Table 3 continued]

| Aqueous pretreatment liquid No. | | | | 83 | 84 | 85 | 86 | 87 | 88 | 89 | 90 | 91 | 92 | 93 | 94 |
|---|---|---|---|---|---|---|---|---|---|---|---|---|---|---|---|
| Resin (A) | Ethylene-vinyl alcohol copolymer (A-1) | Ethylene-vinyl alcohol copolymer aqueous solution 10 | Solid fraction: 15% | 13.3 | 13.3 | 13.3 | 13.3 | 13.3 | 13.3 | 13.3 | 13.3 | 13.3 | 13.3 | 20.0 | 20.0 |
| Surfactant (B) | High HLB value surfactant (B-1) | Surfynol 465 | HLB value: 13.2 | 0.2 | 0.2 | 0.2 | 0.2 | 0.2 | 0.2 | 0.2 | 0.2 | 0.2 | 0.2 | 0.2 | |
| | | POAA compound 1 | HLB value: 12.5 | 1.0 | 1.0 | 1.0 | 1.0 | 1.0 | 1.0 | 1.0 | 1.0 | 1.0 | 1.0 | 1.0 | |
| | Other surfactant (B-2) | Dynol 607 | HLB value: 6.8 | | | | | | | | | | | | 0.2 |
| Coagulant | Polyvalent metal salt | Calcium nitrate | Solubility: 121 g | 20.0 | 20.0 | 20.0 | 20.0 | 20.0 | 20.0 | 20.0 | 20.0 | 20.0 | 20.0 | 20.0 | |
| | | Calcium chloride | Solubility: 75 g | | | | | | | | | | | | 15.0 |

(continued)

| Aqueous pretreatment liquid No. | | | | 83 | 84 | 85 | 86 | 87 | 88 | 89 | 90 | 91 | 92 | 93 | 94 |
|---|---|---|---|---|---|---|---|---|---|---|---|---|---|---|---|
| Water-soluble organic solvent | Water-soluble organic solvent (C-1) | Ethanol | Boiling point: 78°C Surface tension: 23 mN/m | | | | | | | | | | | | |
| | | 2-propanol | Boiling point: 83°C Surface tension: 21 mN/m | | | | | 1.5 | 6.0 | 9.5 | 15.0 | | | | 4.0 |
| | | Propylene glycol monomethyl ether | Boiling point: 121°C Surface tension: 26 mN/m | | | | | | | | | 10.0 | 7.5 | 10.0 | |
| | | Propylene glycol monoethyl ether | Boiling point: 133°C Surface tension: 26 mN/m | | | | | | | | | | | | |
| | | 3-methoxy-1-butanol | Boiling point: 158°C Surface tension: 29 mN/m | 1.3 | 1.0 | 0.7 | 0.6 | | | | | 12.0 | 12.0 | 15.0 | 10.0 |
| | Other water-soluble organic solvent (C-2) | Diethylene glycol diethyl ether | Boiling point: 189°C Surface tension: 27 mN/m | 1.2 | 1.5 | 1.8 | 1.9 | | | | | 3.0 | 5.5 | 6.0 | |

(continued)

| Aqueous pretreatment liquid No. | | | | 83 | 84 | 85 | 86 | 87 | 88 | 89 | 90 | 91 | 92 | 93 | 94 |
|---|---|---|---|---|---|---|---|---|---|---|---|---|---|---|---|
| Water-soluble organic solvent (C) (incl. pH adjuster) | Water-soluble organic solvent (C-1) | Triethanolamine | Boiling point: 335°C Surface tension: 49 mN/m | | | | | | | | | | | | |
| | Other water-soluble organic solvent (C-2) | Triethylamine | Boiling point: 90°C Surface tension: 20 mN/m | 0.5 | 0.5 | 0.5 | 0.5 | 0.5 | 0.5 | 0.5 | 0.5 | 0.5 | 0.5 | 0.5 | |
| pH adjuster | | 12M hydrochloric acid | | 0.5 | 0.5 | 0.5 | 0.5 | 0.5 | 0.5 | 0.5 | 0.5 | 0.5 | 0.5 | 0.5 | |
| Other components | | BITaq | | 1.0 | 1.0 | 1.0 | 1.0 | 1.0 | 1.0 | 1.0 | 1.0 | 1.0 | 1.0 | 1.0 | 1.0 |
| | | Ion-exchanged water | | 61.0 | 61.0 | 61.0 | 61.0 | 62.0 | 57.5 | 54.0 | 48.5 | 38.5 | 38.5 | 25.8 | 49.8 |
| Specifications | | Amount of ethylene-vinyl alcohol copolymer (A-1) | | 2.0 | 2.0 | 2.0 | 2.0 | 2.0 | 2.0 | 2.0 | 2.0 | 2.0 | 2.0 | 3.0 | 3.0 |
| | | Amount of ethylene-vinyl alcohol copolymer (A-1) when amount of water-soluble organic solvent (C-1) deemed 1 | | 1.53 | 2.00 | 2.85 | 3.33 | 1.33 | 0.33 | 0.21 | 0.13 | 0.09 | 0.10 | 0.12 | 0.21 |

Details relating to the product names and abbreviations listed in Table 3 are as follows.

POVAL 11-98 aqueous solution: a solution prepared by dissolving POVAL 11-98 (a polyvinyl alcohol manufactured by Kuraray Co., Ltd., polymerization degree: 1,000, saponification degree: 98%) to achieve a solid fraction of 15%
POVAL 9-88 aqueous solution: a solution prepared by dissolving POVAL 9-88 (a polyvinyl alcohol manufactured by Kuraray Co., Ltd., polymerization degree: 1,000, saponification degree: 88%) to achieve a solid fraction of 15%
Neocryl XK-190: (meth)acrylic resin fine particles manufactured by DSM Coating Resins Ltd., solid fraction: 45%
WEM-3000: urethane (meth)acrylic resin fine particles manufactured by Taisei Fine Chemical Co., Ltd., solid fraction: 32.5%
HYTEC E6400: polyolefin resin fine particles manufactured by Toho Chemical Industry Co., Ltd., solid fraction: 35%
Surfynol 465: an acetylene diol-based surfactant manufactured by Nissin Chemical Co., Ltd., HLB value: 13.2
Surfynol 440: an acetylene diol-based surfactant manufactured by Nissin Chemical Co., Ltd., HLB value: 8.1
ACETYLENOL E200, an acetylene diol-based surfactant manufactured by Kawaken Fine Chemicals Co., Ltd., HLB value: 15.9
Dynol 607: an acetylene diol-based surfactant manufactured by Nissin Chemical Co., Ltd., HLB value: 6.8
POAE compound 1: a compound of the above general formula 7, in which $R^2$ is a lauryl group, m=4 and n=0, HLB value: 9.7
POAE compound 2: a compound of the above general formula 7, in which $R^2$ is a lauryl group, m=9 and n=0, HLB value: 13.6
POAE compound 3: a compound of the above general formula 7, in which $R^2$ is a lauryl group, m=12 and n=0, HLB value: 16.5
POAE compound 4: a compound of the above general formula 7, in which $R^2$ is a lauryl group, m=50 and n=0, HLB value: 18.4
POAE compound 5: a compound of the above general formula 7, in which $R^2$ is a cetyl group, m=20 and n=0, HLB value: 15.7
POAE compound 6: a compound of the above general formula 7, in which $R^2$ is a stearyl group, m=6 and n=0, HLB value: 9.9
POAE compound 7: a compound of the above general formula 7, in which $R^2$ is a stearyl group, m=20 and n=0, HLB value: 15.3
POAE compound 8: a compound of the above general formula 7, in which $R^2$ is a behenyl group, m=20 and n=0, HLB value: 14.6
POAE compound 9: a compound of the above general formula 7, in which $R^2$ is a lauryl group, m=3 and n=0, HLB value: 8.3
POAE compound 10: a compound of the above general formula 7, in which $R^2$ is a stearyl group, m=5 and n=0, HLB value: 9.0
POAA compound 1: a compound of the above general formula 8, in which $R^3$ is a lauryl group, p=3.5, q=0, r=3.5, s=0, HLB value: 12.5
POAA compound 2: a compound of the above general formula 8, in which $R^3$ is a lauryl group, p=15, q=0, r=15, s=0, HLB value: 17.5
POAA compound 3: a compound of the above general formula 8, in which $R^3$ is a stearyl group, p=3.5, q=0, r=3.5, s=0, HLB value: 10.7
POAA compound 4: a compound of the above general formula 8, in which $R^3$ is a stearyl group, p=15, q=0, r=15, s=0, HLB value: 16.6
POAA compound 5: a compound of the above general formula 8, in which $R^3$ is a stearyl group, p=2, q=0, r=2, s=0, HLB value: 7.9
BYK-333: a siloxane-based surfactant manufactured by BYK-Chemie GmbH (a compound of the above general formula 9), HLB value: 10.1
Fluorine compound 1: a fluorine-based surfactant of general formula 13 shown below (wherein x is an integer of 1 to 7), HLB value: 6.4
PAS-H-1L: a diallyldimethylammonium chloride polymer manufactured by Nittobo Medical Co., Ltd. (solid fraction: 28%, base value: 350 mgKOH/g)
PAS-M-1: a methyldiallylamine hydrochloride polymer manufactured by Nittobo Medical Co., Ltd. (solid fraction: 50%, base value: 385 mgKOH/g)
PAA-HCl-3L: an allylamine hydrochloride polymer manufactured by Nittobo Medical Co., Ltd. (solid fraction: 50%, base value: 605 mgKOH/g)
Catiomaster PD-30: a polyamine epichlorohydrin manufactured by Yokkaichi Chemical Co., Ltd. (solid fraction: 52%, base value 410 mgKOH/g)
ORGATIX TC-300: a titanium lactate ammonium salt manufactured by Matsumoto Fine Chemical Co., Ltd. (solid

fraction: 41%)
12M hydrochloric acid: concentrated hydrochloric acid (concentration: 12 mol/L)
BITaq: a 1% aqueous solution of 1,2-benzisothiazolin-3-one

[Chemical formula 5]

General formula 13

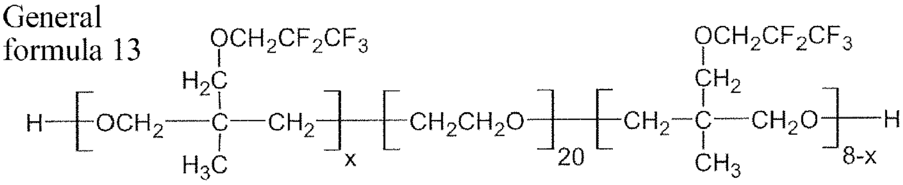

<(4-1) Pigment Dispersion Production Examples>

A mixing container (capacity: 10 L) fitted with a stirrer was charged with 450 g of carbon black (PrinteX 85 manufactured by Orion Engineered Carbons S.A.), 90 g of a styrene-acrylic resin (a random polymer of styrene/acrylic acid/behenyl acrylate = 45/30/25 (mass ratio) in which all of the acid groups have been neutralized with dimethylaminoethanol, acid value: 230 mgKOH/g, weight average molecular weight: 20,000) and 2,460 g of water, and premixing was conducted for one hour. Subsequently, using a Dyno-Mill (capacity: 0.6 L) manufactured by Shinmaru Enterprises Corporation filled with 1,800 g of zirconia grinding beads of diameter 0.5 mm, a circulating dispersion was conducted until the 50% diameter of the carbon black was reduced to about 100 nm, thus completing production of a black pigment dispersion. The above 50% diameter refers to the value measured using the same device and method as those described above for the volume-based cumulative 50% diameter of the above resin fine particles.

Further, with the exception of using each of the pigments described below as the pigment, and performing circulating dispersion until the 50% diameter reached the value shown below, the same raw materials and method as those described above for the black pigment dispersion were used to produce a cyan pigment dispersion, a magenta pigment dispersion, and a yellow pigment dispersion.

Cyan pigment dispersion: LIONOL BLUE 7358G (C.I. Pigment Blue 15:3) manufactured by Toyo Color Co., Ltd., 50% diameter = 150 nm
Magenta pigment dispersion: FASTOGEN SUPER MAGENTA RG (C.I. Pigment Red 122), manufactured by DIC Corporation, 50% diameter = 150 nm
Yellow pigment dispersion: LIONOL YELLOW TT1405G (C.I. Pigment Yellow 14) manufactured by Toyo Color Co., Ltd., 50% diameter = 150 nm

<(4-2) Aqueous Inkjet Ink Production Examples>

First, 33.3 parts of the black pigment dispersion, 13.4 parts of an aqueous solution (solid fraction: 30%) of a binder resin 40 produced using the method disclosed in the examples of JP 2020-180178 A, 20 parts of 1,2-propanediol, 4 parts of propylene glycol monomethyl ether, 1.5 parts of TEGO Wet 280 (a polyether-modified siloxane-based surfactant manufactured by Evonik GmbH) and 1 part of Surfynol 465 (an acetylene diol-based surfactant manufactured by Nissin Chemical Co., Ltd.) were added sequentially to a mixing container, and water was then added to bring the total amount of added contents to 100 parts, and the contents were stirred thoroughly with the stirrer until a uniform mixture was obtained. Subsequently, the mixture was filtered through a membrane filter with a pore size of 1 μm to remove coarse particles that can cause head blockages, thus completing production of an aqueous black ink 1 (K1).

Further, with the exception of using the cyan pigment dispersion, the magenta pigment dispersion, and the yellow pigment dispersion respectively as the pigment dispersion, the same method as that described above for the aqueous black ink 1 was used to obtain an aqueous cyan ink 1 (C1), an aqueous magenta ink 1 (M1) and an aqueous yellow ink 1 (Y1). These four types of aqueous inkjet ink, namely K1, C1, M1 and Y1, were used as an inkjet ink set 1 in the evaluations described below.

<(5-1) Production Examples for Paper Substrates Coated with Aqueous Pretreatment Liquid>

Using a non-wire bar coater 250-OSP-02 manufactured by OSG System Products Co., Ltd., each of the aqueous pretreatment liquids produced in the manner described above was applied to a coated paper "OK Top Coat +" manufactured by Oji Paper Co., Ltd. (basis weight: 104.7 g/m$^2$) in an amount sufficient to form a wet thickness of 2.0±0.2

μm, and the coated substrate was then placed in a 70°C air oven and dried for two minutes to complete production of a substrate coated with an aqueous pretreatment liquid.

<(5-2) Printed Item Production Examples>

Four inkjet heads KJ4B-1200 manufactured by Kyocera Corporation (design resolution: 1,200 dpi, nozzle diameter: 20 μm) were installed above a conveyor capable of transporting a substrate, and the heads were filled with the aqueous inkjet ink set 1 produced above such that the inks K1, C1, M1 and Y1 were jetted from the heads in that order from the upstream side relative to the transport direction of the substrate. Subsequently, the substrate coated with an aqueous pretreatment liquid produced in the manner described above was secured to the conveyor, and the conveyor was then driven at a constant speed. When the substrate passed beneath the installed position of each inkjet head, each of the inkjet inks was jetted using a drop volume of 2 pL to print an image, and immediately after printing, the printed item was placed in a 70°C air oven and dried for three minutes to complete production of the printed item.

Two types of print images were prepared, namely, an image in which 5 cm × 10 cm solid patches with a print ratio of 100% were arranged adjacent to one another in the order CMYK (hereinafter called the "solid patches image"), and a four-color (CMYK) image in which the total print ratio (the total of the print ratios for each of the colors) was varied continuously from 40 to 320% (hereinafter called the "gradation image", wherein the print ratio for each color is the same at each total print ratio), and printed items were produced using each of these images.

[Examples 1 to 84, Comparative Examples 1 to 10]

Each of the aqueous pretreatment liquids produced above was used in combination with the aqueous inkjet ink set 1 to produce printed items. Using these printed items and the aqueous pretreatment liquid itself, the evaluations described below were conducted. The evaluation results were as shown below in Table 4.

<Evaluation 1: Evaluation of Storage Stability of Aqueous Pretreatment Liquid>

The viscosity of each aqueous pretreatment liquid produced above was measured using a TVE25L viscometer manufactured by Toki Sangyo Co., Ltd., and the aqueous pretreatment liquid was then placed in a sealed container and stored in a still state in a thermostatic chamber set to 60°C. After each one week of storage, the sealed container was removed, the viscosity following storage was remeasured using the same device and conditions as those used for the initial evaluation, and the storage stability of the aqueous pretreatment liquid was evaluated by calculating the change in viscosity during storage, and by visually ascertaining the absence or presence of precipitation or cloudiness. The evaluation criteria were as follows, with 3 points or more being deemed a practically applicable level.

5: the change in viscosity after four weeks storage was less than ±10%, and no precipitation or cloudiness had developed even after four weeks
4: the change in viscosity after three weeks storage was less than ±10%, and no precipitation or cloudiness had developed even after three weeks
3: the change in viscosity after two weeks storage was less than ±10%, and no precipitation or cloudiness had developed even after two weeks
2: the change in viscosity after one week storage was less than ±10%, and no precipitation or cloudiness had developed even after one week
1: the change in viscosity after one week storage was at least ±10%, and/or precipitation or cloudiness had developed after one week

<Evaluation 2: Evaluation of Image Quality (Voids, Dot Shape)>

Based on the method described above, printed items of the above solid patches image produced using various conveyor drive speeds were inspected visually to ascertain the level of voids. Further, using printed items of the gradation image produced using various conveyor drive speeds, the dot shape in the portion with a print ratio of 40 to 60% was observed at a magnification of 200× using an optical microscope. Based on the level of voids and the dot shape, an overall evaluation of the image quality was made. The evaluation criteria were as follows, with 3 points or more being deemed a practically applicable level.

5: in printed items printed at a conveyor drive speed of 75 m/minute, for all colors, no voids or dot shape irregularities were observed
4: in printed items printed at a conveyor drive speed of 75 m/minute, some voids and/or dot shape irregularities

were observed, but in printed items printed at a conveyor drive speed of 60 m/minute, for all colors, no voids or dot shape irregularities were observed

3: in printed items printed at a conveyor drive speed of 60 m/minute, some voids and/or dot shape irregularities were observed, but in printed items printed at a conveyor drive speed of 45 m/minute, for all colors, no voids or dot shape irregularities were observed

2: in printed items printed at a conveyor drive speed of 45 m/minute, some voids and/or dot shape irregularities were observed, but in printed items printed at a conveyor drive speed of 30 m/minute, for all colors, no voids or dot shape irregularities were observed

1: in printed items printed at a conveyor drive speed of 30 m/minute, some voids and/or dot shape irregularities were observed

<Evaluation 3: Evaluation of Mixed Color Bleeding>

Based on the method described above, a printed item of the gradation image was produced at a conveyor drive speed of 60 m/minute. An evaluation of mixed color bleeding was then made by observing the dot shape in the portions of the obtained printed item with a print ratio of 120 to 240% at a magnification of 200× using an optical microscope. The evaluation criteria were as follows, with 3 points or more being deemed a practically applicable level.

5: in the portion with a total print ratio of 240%, no coalescence of dots or dot shape irregularities were observed

4: in the portion with a total print ratio of 240%, some coalescence of dots or dot shape irregularities were observed, but in the portion with a total print ratio of 200%, no coalescence of dots or dot shape irregularities were observed

3: in the portion with a total print ratio of 200%, some coalescence of dots or dot shape irregularities were observed, but in the portion with a total print ratio of 160%, no coalescence of dots or dot shape irregularities were observed

2: in the portion with a total print ratio of 160%, some coalescence of dots or dot shape irregularities were observed, but in the portion with a total print ratio of 120%, no coalescence of dots or dot shape irregularities were observed

1: in the portion with a total print ratio of 120%, some coalescence of dots or dot shape irregularities were observed

<Evaluation 4: Evaluation of Separability>

Based on the method described above, a printed item of the solid patches image was produced at a conveyor drive speed of 60 m/minute, and the obtained printed item was cut into 3 cm × 3 cm squares. Four hundred of these cut printed item fragments were prepared, all of these fragments were placed in a mixing container fitted with a stirrer, 1,500 g of a 0.02% by mass aqueous solution of sodium hydroxide was added, the temperature inside the mixing container was raised to 45°C under constant stirring, and stirring was then continued at that temperature for 20 minutes (the wet disintegration step). Subsequently, 4,000 g of water and 5 g of a 1.5% by mass aqueous solution of a deinking agent DI-7020 (manufactured by Kao Corporation) were added to the mixture, and an aqueous inkjet ink layer removal step (by the flotation method) was conducted by stirring the mixture for 10 minutes while air was supplied to the mixture and froth (bubbles) was appropriately scooped off the surface of the mixture. Subsequently, the mixture was subjected to suction filtration using a Buchner funnel, and the color (degree of coloration) of the resulting residue (pulp mat) was inspected visually to evaluate the separability from the paper substrate. The evaluation criteria were as follows, with 2 points or more being deemed a practically applicable level.

4: the color (degree of coloration) was lighter than that observed for the pulp mat of Example 3

3: the color (degree of coloration) was of a similar level to that observed for the pulp mat of Example 3

2: the color (degree of coloration) was of a similar level to that observed for the pulp mat of Example 11

1: the color (degree of coloration) was more intense than that observed for the pulp mat of Example 11

<Evaluation 5: Evaluation of Abrasion Resistance>

Based on the method described above, a printed item of the solid patches image was produced at a conveyor drive speed of 60 m/minute, and the obtained printed item was set in a Sutherland Rub Tester (manufactured by Toyo Seiki Seisaku-sho, Ltd.) fitted with a rubbing paper (NPI-70 manufactured by Nippon Paper Industries Co., Ltd.), and a 4-pound weight was then placed on top and a prescribed number of back and forth rubbing repetitions were performed. The abrasion resistance was then evaluated by ascertaining visually whether or not the printed item had detached to expose the substrate. The evaluation criteria were as follows, with 3 points or more being deemed a practically applicable level. The abrasion resistance evaluation was conducted for each of the four colors, and the result for the color that exhibited the worst evaluation result was recorded in Table 4 below.

4: even after 20 back and forth rubbing repetitions, the printed item did not detach and the substrate was not exposed
3: after 20 back and forth rubbing repetitions, the printed item had detached and the substrate was exposed, but after 15 back and forth rubbing repetitions, the substrate was not exposed
2: after 15 back and forth rubbing repetitions, the printed item had detached and the substrate was exposed, but after 10 back and forth rubbing repetitions, the substrate was not exposed
1: even after 10 back and forth rubbing repetitions, the printed item had detached and the substrate was exposed

[Table 4]

| Example / Comparative Example | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| Used aqueous pretreatment liquid No. | | 1 | 2 | 3 | 4 | 5 | 6 | 7 | 8 | 9 | 10 | 11 | 12 | 13 | 14 |
| Evaluation results | Evaluation 1: Storage stability | 5 | 5 | 5 | 5 | 5 | 4 | 4 | 3 | 5 | 5 | 4 | 5 | 5 | 5 |
| | Evaluation 2: Image quality | 5 | 5 | 5 | 5 | 5 | 5 | 5 | 5 | 5 | 5 | 5 | 5 | 5 | 5 |
| | Evaluation 3: Mixed color bleeding | 5 | 5 | 5 | 5 | 5 | 5 | 5 | 4 | 5 | 5 | 5 | 3 | 4 | 5 |
| | Evaluation 4: Separability | 4 | 4 | 3 | 4 | 3 | 4 | 4 | 4 | 4 | 4 | 2 | 2 | 3 | 4 |
| | Evaluation 5: Abrasion resistance | 4 | 4 | 3 | 4 | 4 | 4 | 4 | 3 | 4 | 4 | 2 | 2 | 2 | 4 |

| Example / Comparative Example | | Example 15 | Example 16 | Example 17 | Example 18 | Example 19 | Example 20 | Example 21 | Example 22 | Example 23 | Example 24 | Example 25 | Example 26 | Comparative Example 1 | Comparative Example 2 | Comparative Example 3 |
|---|---|---|---|---|---|---|---|---|---|---|---|---|---|---|---|---|
| Used aqueous pretreatment liquid No. | | 15 | 16 | 17 | 18 | 19 | 20 | 21 | 22 | 23 | 24 | 25 | 26 | 27 | 28 | 29 |
| Evaluation results | Evaluation 1: Storage stability | 5 | 4 | 3 | 5 | 5 | 3 | 3 | 4 | 3 | 3 | 3 | 3 | 1 | 1 | 1 |
| | Evaluation 2: Image quality | 5 | 4 | 4 | 5 | 5 | 5 | 5 | 5 | 5 | 3 | 5 | 5 | 5 | 5 | 5 |
| | Evaluation 3: Mixed color bleeding | 5 | 5 | 4 | 5 | 5 | 4 | 5 | 4 | 5 | 3 | 5 | 5 | 3 | 5 | 5 |
| | Evaluation 4: Separability | 4 | 4 | 4 | 4 | 4 | 4 | 4 | 2 | 4 | 4 | 4 | 4 | 3 | 1 | 2 |
| | Evaluation 5: Abrasion resistance | 4 | 4 | 4 | 4 | 4 | 2 | 3 | 2 | 3 | 3 | 4 | 4 | 2 | 4 | 3 |

[Table 4 continued]

| Example / Comparative Example | | Example 27 | Example 28 | Example 29 | Example 30 | Example 31 | Example 32 | Example 33 | Example 34 | Example 35 | Example 36 | Example 37 | Example 38 | Example 39 | Example 40 | Example 41 |
|---|---|---|---|---|---|---|---|---|---|---|---|---|---|---|---|---|
| Used aqueous pretreatment liquid No. | | 30 | 31 | 32 | 33 | 34 | 35 | 36 | 37 | 38 | 39 | 40 | 41 | 42 | 43 | 44 |
| Evaluation results | Evaluation 1: Storage stability | 5 | 5 | 3 | 5 | 5 | 4 | 5 | 3 | 5 | 5 | 5 | 4 | 4 | 4 | 3 |
| | Evaluation 2: Image quality | 5 | 5 | 3 | 5 | 5 | 5 | 5 | 3 | 5 | 5 | 5 | 5 | 4 | 5 | 4 |
| | Evaluation 3: Mixed color bleeding | 5 | 5 | 4 | 5 | 5 | 5 | 5 | 4 | 5 | 5 | 5 | 5 | 5 | 5 | 4 |
| | Evaluation 4: Separability | 4 | 4 | 4 | 4 | 3 | 3 | 4 | 4 | 4 | 4 | 4 | 3 | 4 | 3 | 3 |
| | Evaluation 5: Abrasion resistance | 4 | 4 | 4 | 4 | 4 | 3 | 4 | 4 | 4 | 4 | 4 | 3 | 4 | 4 | 4 |

| Example / Comparative Example | | Example 42 | Example 43 | Example 44 | Example 45 | Example 46 | Example 47 | Example 48 | Example 49 | Comparative Example 4 | Comparative Example 5 | Comparative Example 6 | Comparative Example 7 | Comparative Example 8 |
|---|---|---|---|---|---|---|---|---|---|---|---|---|---|---|
| Used aqueous pretreatment liquid No. | | 45 | 46 | 47 | 48 | 49 | 50 | 51 | 52 | 53 | 54 | 55 | 56 | 57 |
| Evaluation results | Evaluation 1: Storage stability | 4 | 5 | 5 | 5 | 5 | 5 | 5 | 5 | 1 | 1 | 1 | 2 | 1 |
| | Evaluation 2: Image quality | 4 | 5 | 5 | 5 | 5 | 5 | 5 | 5 | 2 | 1 | 1 | 1 | 1 |
| | Evaluation 3: Mixed color bleeding | 5 | 5 | 5 | 4 | 5 | 5 | 5 | 5 | 3 | 4 | 4 | 3 | 2 |
| | Evaluation 4: Separability | 3 | 4 | 4 | 3 | 4 | 4 | 4 | 4 | 3 | 3 | 3 | 3 | 2 |
| | Evaluation 5: Abrasion resistance | 4 | 4 | 4 | 3 | 4 | 4 | 4 | 4 | 4 | 3 | 4 | 3 | 4 |

[Table 4 continued]

| Example / Comparative Example | | Example 50 | Example 51 | Example 52 | Example 53 | Example 54 | Example 55 | Example 56 | Example 57 | Example 58 | Example 59 | Example 60 | Example 61 | Comparative Example 9 |
|---|---|---|---|---|---|---|---|---|---|---|---|---|---|---|
| Used aqueous pretreatment liquid No. | | 58 | 59 | 60 | 61 | 62 | 63 | 64 | 65 | 66 | 67 | 68 | 69 | 70 |
| Evaluation results | Evaluation 1: Storage stability | 5 | 4 | 4 | 4 | 5 | 5 | 5 | 4 | 4 | 4 | 4 | 4 | 5 |
| | Evaluation 2: Image quality | 5 | 5 | 4 | 5 | 5 | 5 | 5 | 4 | 4 | 3 | 3 | 4 | 3 |
| | Evaluation 3: Mixed color bleeding | 4 | 5 | 5 | 4 | 4 | 4 | 3 | 5 | 4 | 5 | 5 | 3 | 1 |
| | Evaluation 4: Separability | 4 | 3 | 3 | 3 | 3 | 3 | 3 | 4 | 4 | 4 | 4 | 3 | 3 |
| | Evaluation 5: Abrasion resistance | 4 | 4 | 4 | 4 | 4 | 4 | 4 | 4 | 4 | 3 | 3 | 3 | 4 |

| Example / Comparative Example | | Example 62 | Example 63 | Example 64 | Example 65 | Example 66 | Example 67 | Example 68 | Example 69 | Example 70 | Example 71 |
|---|---|---|---|---|---|---|---|---|---|---|---|
| Used aqueous pretreatment liquid No. | | 71 | 72 | 73 | 74 | 75 | 76 | 77 | 78 | 79 | 80 |
| Evaluation results | Evaluation 1: Storage stability | 5 | 5 | 5 | 5 | 5 | 4 | 5 | 4 | 5 | 3 |
| | Evaluation 2: Image quality | 5 | 5 | 5 | 5 | 5 | 4 | 5 | 4 | 5 | 4 |
| | Evaluation 3: Mixed color bleeding | 5 | 5 | 5 | 5 | 4 | 5 | 3 | 4 | 3 | 3 |
| | Evaluation 4: Separability | 4 | 4 | 4 | 4 | 4 | 4 | 3 | 3 | 3 | 3 |
| | Evaluation 5: Abrasion resistance | 4 | 4 | 4 | 4 | 3 | 4 | 3 | 3 | 3 | 2 |

[Table 4 continued]

| Example / Comparative Example | | Example 72 | Example 73 | Example 74 | Example 75 | Example 76 | Example 77 | Example 78 | Example 79 | Example 80 | Example 81 | Example 82 | Example 83 | Example 84 | Comparative Example 10 |
|---|---|---|---|---|---|---|---|---|---|---|---|---|---|---|---|
| Used aqueous pretreatment liquid No. | | 81 | 82 | 83 | 84 | 85 | 86 | 87 | 88 | 89 | 90 | 91 | 92 | 93 | 94 |
| Evaluation results | Evaluation 1: Storage stability | 5 | 4 | 3 | 3 | 3 | 3 | 4 | 5 | 4 | 3 | 3 | 3 | 3 | 1 |
| | Evaluation 2: Image quality | 5 | 5 | 4 | 4 | 4 | 3 | 4 | 5 | 5 | 4 | 3 | 4 | 4 | 2 |
| | Evaluation 3: Mixed color bleeding | 5 | 5 | 4 | 4 | 3 | 3 | 5 | 5 | 5 | 5 | 4 | 5 | 4 | 3 |
| | Evaluation 4: Separability | 4 | 4 | 4 | 3 | 3 | 3 | 3 | 4 | 4 | 3 | 3 | 3 | 3 | 4 |
| | Evaluation 5: Abrasion resistance | 4 | 4 | 4 | 4 | 3 | 2 | 4 | 4 | 4 | 4 | 3 | 4 | 3 | 4 |

As is evident from Table 4, the aqueous pretreatment liquids that contained a combination of the ethylene-vinyl alcohol copolymer resin (A-1) and the surfactant (B-1) with an HLB value of 9.5 or higher were confirmed as having practically applicable levels for all of the evaluated properties, namely, storage stability, voids, dot shape, mixed color bleeding and separability. Moreover, by using at least a prescribed amount of an ethylene-vinyl alcohol copolymer resin (A-1) for which the degree of ethylene modification was 35 mol% or less and/or the polymerization degree was 500 or greater, or alternatively, by ensuring that the amount of water-soluble organic solvent having a boiling point of 230°C or higher (and preferably 200°C or higher) was not more than a certain prescribed value, printed items that also exhibited excellent abrasion resistance could be obtained.

In contrast, in the case of the aqueous pretreatment liquids 28 and 29 which did not contain the ethylene-vinyl alcohol copolymer resin (A-1), and the aqueous pretreatment liquid 27 which contained an ethylene-vinyl alcohol copolymer resin having a saponification degree of less than 80 mol%, the storage stability was greatly inferior (Comparative Examples 1 to 3). These results indicated that in order to prevent changes in the structure of the copolymer resin over time, and the generation of precipitates caused by the crystallinity of the copolymer resin, the presence of the ethylene-vinyl alcohol copolymer resin (A-1) is essential.

Further, even in those cases where the ethylene-vinyl alcohol copolymer resin (A-1) was used, and when the surfactant (B-1) with an HLB value of 9.5 or higher was not included (aqueous pretreatment liquids 53 to 57), the storage stability deteriorated significantly (Comparative Examples 4 to 8). Also, in Comparative Examples 4 to 8, voids and dot shape irregularities occurred in the printed items. Based on these results, it may be stated that in order to stabilize the ethylene-vinyl alcohol copolymer resin (A-1) within the aqueous pretreatment liquid, the presence of a surfactant having the prescribed HLB value is essential. Further, it is also thought that the surfactants with small HLB values contained in the aqueous pretreatment liquids 53 to 57 may repel the subsequently printed aqueous inkjet ink, leading to voids and the like.

In addition, the aqueous pretreatment liquid 94 reproduced the pretreatment liquid 18 disclosed in the examples of Patent Document 5, and the evaluation results for this pretreatment liquid revealed inferior storage stability and the occurrence of voids and the like in the printed items. It is thought that this is due to the pretreatment liquid not containing the high HLB value surfactant (B-1) (see also Comparative Examples 4 to 8).

Furthermore, in a system such as the aqueous pretreatment liquid 70, which contains absolutely no coagulant, mixed color bleeding occurred. This confirmed that improving the image quality with just the ethylene-vinyl alcohol copolymer resin (A-1) and the high HLB value surfactant (B-1) was difficult, with the presence of a coagulant also being necessary.

## Claims

**1.** An aqueous pretreatment liquid that is used together with an aqueous inkjet ink, wherein

the aqueous pretreatment liquid comprises a resin (A), a surfactant (B), a coagulant, and a water-soluble organic solvent (C),
the resin (A) includes an ethylene-vinyl alcohol copolymer resin (A-1) having a saponification degree of 80 mol% or higher,
the surfactant (B) includes a surfactant (B-1) having an HLB value of 9.5 or higher, and
the water-soluble organic solvent (C) includes a water-soluble organic solvent (C-1) containing at least one hydroxyl group within a molecular structure.

**2.** The aqueous pretreatment liquid according to Claim 1, wherein a degree of ethylene modification of the ethylene-vinyl alcohol copolymer resin (A-1) is within a range from 0.8 to 50 mol%.

**3.** The aqueous pretreatment liquid according to Claim 1 or 2, wherein

the coagulant includes a polyvalent metal salt, and
a counter anion that constitutes the polyvalent metal salt is a counter anion having an oxygen atom.

**4.** The aqueous pretreatment liquid according to any one of Claims 1 to 3, wherein a mass ratio between an amount of the water-soluble organic solvent (C-1) containing at least one hydroxyl group within a molecular structure, and an amount of the ethylene-vinyl alcohol copolymer resin (A-1), is within a range from 1:0.1 to 1:3.0.

**5.** The aqueous pretreatment liquid according to any one of Claims 1 to 4, wherein the surfactant (B-1) having an HLB value of 9.5 or higher includes at least one surfactant selected from the group consisting of acetylene diol-based

surfactants, (poly)oxyalkylene alkyl ether-based surfactants and (poly)oxyalkylene alkyl amine-based surfactants.

**6.** The aqueous pretreatment liquid according to Claim 5, wherein the surfactant (B-1) having an HLB value of 9.5 or higher includes an acetylene diol-based surfactant, and a (poly)oxyalkylene alkyl ether-based surfactant and/or (poly)oxyalkylene alkyl amine-based surfactant.

**7.** An ink set comprising the aqueous pretreatment liquid according to any one of Claims 1 to 6, and an aqueous inkjet ink containing a pigment, a resin and water.

**8.** A printed item having a substrate, a pretreatment layer formed using the aqueous pretreatment liquid according to any one of Claims 1 to 6, and a layer formed from an aqueous inkjet ink containing a pigment, a resin and water, in that order.

**9.** A method for separating the layer formed from an aqueous inkjet ink from the printed item according to Claim 8, the method including a step of dipping the printed item in a basic solution.

## Patentansprüche

**1.** Wässrige Vorbehandlungsflüssigkeit, die zusammen mit einer wässrigen Tintenstrahltinte verwendet wird, wobei

die wässrige Vorbehandlungsflüssigkeit ein Harz (A), ein Tensid (B), ein Koagulationsmittel und ein wasserlösliches organisches Lösungsmittel (C) enthält,
das Harz (A) ein Ethylen-Vinylalkohol-Copolymerharz (A-1) mit einem Verseifungsgrad von 80 Mol-% oder mehr enthält,
das Tensid (B) ein Tensid (B-1) mit einem HLB-Wert von 9,5 oder höher enthält, und
das wasserlösliche organische Lösungsmittel (C) ein wasserlösliches organisches Lösungsmittel (C-1) enthält, das mindestens eine Hydroxylgruppe in einer Molekularstruktur enthält.

**2.** Wässrige Vorbehandlungsflüssigkeit nach Anspruch 1, wobei der Grad der Ethylenmodifikation des Ethylen-Vinylalkohol-Copolymerharzes (A-1) in einem Bereich von 0,8 bis 50 Mol-% liegt.

**3.** Wässrige Vorbehandlungsflüssigkeit nach Anspruch 1 oder 2, wobei

das Koagulationsmittel ein polyvalentes Metallsalz enthält und
ein Gegenanion, das das polyvalente Metallsalz bildet, ein Gegenanion mit einem Sauerstoffatom ist.

**4.** Wässrige Vorbehandlungsflüssigkeit nach einem der Ansprüche 1 bis 3, wobei das Massenverhältnis zwischen der Menge des wasserlöslichen organischen Lösungsmittels (C-1), das mindestens eine Hydroxylgruppe in der Molekularstruktur enthält, und der Menge des Ethylen-Vinylalkohol-Copolymerharzes (A-1) im Bereich von 1:0,1 bis 1:3,0 liegt.

**5.** Wässrige Vorbehandlungsflüssigkeit nach einem der Ansprüche 1 bis 4, wobei das Tensid (B-1) mit einem HLB-Wert von 9,5 oder höher mindestens ein Tensid enthält, das aus der Gruppe ausgewählt ist, die aus Tensiden auf Acetylendiol-Basis, Tensiden auf (Poly)oxyalkylenalkylether-Basis und Tensiden auf (Poly)oxyalkylenalkylamin-Basis besteht.

**6.** Wässrige Vorbehandlungsflüssigkeit nach Anspruch 5, wobei das Tensid (B-1) mit einem HLB-Wert von 9,5 oder höher ein Tensid auf Acetylendiol-Basis, und ein Tensid auf (Poly)oxyalkylenalkylether-Basis und/oder ein Tensid auf (Poly)oxyalkylenalkylamin-Basis enthält.

**7.** Tintenset, das die wässrige Vorbehandlungsflüssigkeit nach einem der Ansprüche 1 bis 6 und eine wässrige Tintenstrahltinte, die ein Pigment, ein Harz und Wasser enthält, umfasst.

**8.** Druckerzeugnis mit einem Substrat, einer Vorbehandlungsschicht, die unter Verwendung der wässrigen Vorbehandlungsflüssigkeit nach einem der Ansprüche 1 bis 6 gebildet ist, und einer Schicht, die aus einer wässrigen Tintenstrahltinte gebildet ist, die ein Pigment, ein Harz und Wasser enthält, in dieser Reihenfolge.

**9.** Verfahren zum Trennen der aus einer wässrigen Tintenstrahltinte gebildeten Schicht von dem Druckerzeugnis nach Anspruch 8, wobei das Verfahren einen Schritt des Eintauchens des Druckerzeugnisses in eine basische Lösung umfasst.

**Revendications**

**1.** Liquide de prétraitement aqueux qui est utilisé avec une encre à jet d'encre aqueuse, dans lequel

le liquide de prétraitement aqueux comprend une résine (A), un tensioactif (B), un coagulant et un solvant organique soluble dans l'eau (C),
la résine (A) inclut une résine de copolymère éthylène-alcool vinylique (A-1) ayant un degré de saponification égal ou supérieur à 80 % en moles,
le tensioactif (B) inclut un tensioactif (B-1) ayant une valeur HLB égale ou supérieure à 9,5, et
le solvant organique soluble dans l'eau (C) inclut un solvant organique soluble dans l'eau (C-1) contenant au moins un groupe hydroxyle au sein d'une structure moléculaire.

**2.** Liquide de prétraitement aqueux selon la revendication 1, dans lequel un degré de modification d'éthylène de la résine de copolymère éthylène-alcool vinylique (A-1) est dans une plage allant de 0,8 à 50 % en moles.

**3.** Liquide de prétraitement aqueux selon la revendication 1 ou 2, dans lequel

le coagulant inclut un sel métallique polyvalent, et
un contre-anion qui constitue le sel métallique polyvalent est un contre-anion ayant un atome d'oxygène.

**4.** Liquide de prétraitement aqueux selon l'une quelconque des revendications 1 à 3, dans lequel un rapport en masse entre une quantité du solvant organique soluble dans l'eau (C-1) contenant au moins un groupe hydroxyle au sein d'une structure moléculaire, et une quantité de la résine de copolymère d'éthylène-alcool vinylique (A-1), est dans une plage allant de 1:0,1 à 1:3,0.

**5.** Liquide de prétraitement aqueux selon l'une quelconque des revendications 1 à 4, dans lequel le tensioactif (B-1) ayant une valeur HLB égale ou supérieure à 9,5 inclut au moins un tensioactif sélectionné dans le groupe constitué par les tensioactifs à base de diol acétylène, les tensioactifs à base d'éther de (poly)oxyalkylène-alkyle et les tensioactifs à base (poly)oxyalkylène alkylamine.

**6.** Liquide de prétraitement aqueux selon la revendication 5, dans lequel le tensioactif (B-1) ayant une valeur HLB égale ou supérieure à 9,5 inclut un tensioactif à base de diol acétylène, et un tensioactif à base d'éther de (poly)oxyalkylène-alkyle et/ou un tensioactif à base (poly)oxyalkylène alkylamine.

**7.** Ensemble d'encres comprenant le liquide de prétraitement aqueux selon l'une quelconque des revendications 1 à 6, et une encre à jet d'encre aqueuse contenant un pigment, une résine et de l'eau.

**8.** Article imprimé ayant un substrat, une couche de prétraitement formée à l'aide du liquide de prétraitement aqueux selon l'une quelconque des revendications 1 à 6, et une couche formée à partir d'une encre à jet d'encre aqueuse contenant un pigment, une résine et de l'eau, dans cet ordre.

**9.** Procédé de séparation de la couche formée à partir d'une encre à jet d'encre aqueuse de l'article imprimé selon la revendication 8, le procédé incluant une étape d'immersion de l'article imprimé dans une solution basique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004276253 A
- JP 2011056884 A
- JP 2017128117 A
- JP 2017148940 A
- JP 2018114751 A
- JP 2019127495 A
- JP 2022030295 A
- JP 2003002071 A
- JP 2020180178 A